(19) **Europäisches Patentamt**
**European Patent Office**
**Office européen des brevets**

(11) **EP 3 080 944 B1**

## (12) EUROPÄISCHE PATENTSCHRIFT

(45) Veröffentlichungstag und Bekanntmachung des Hinweises auf die Patenterteilung:
**20.01.2021 Patentblatt 2021/03**

(21) Anmeldenummer: **14821062.8**

(22) Anmeldetag: **03.12.2014**

(51) Int Cl.:
*H04L 7/02* (2006.01)    *H04L 25/05* (2006.01)

(86) Internationale Anmeldenummer:
**PCT/EP2014/003229**

(87) Internationale Veröffentlichungsnummer:
**WO 2015/086131 (18.06.2015 Gazette 2015/24)**

(54) **VERFAHREN UND VORRICHTUNG ZUM ÜBERTRAGEN VON DATEN AN ASYNCHRONEN ÜBERGÄNGEN ZWISCHEN DOMÄNEN MIT UNTERSCHIEDLICHEN TAKTFREQUENZEN**

METHOD AND DEVICE FOR DATA TRANSMISSION OVER ASYNCHRONOUS INTERFACES BETWEEN DOMAINS WITH DIFFERENT CLOCKFREQUENCIES

PROCÉDÉ ET DISPOSITIF DE TRANSMISSION DE DONNÉES VIA DES INTERFACES ASYNCHRONES ENTRE DES DOMAINS AVEC DES FREÖEQUENCE D'HORLOGE DIFFÉRENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2013 DE 102013020954**

(43) Veröffentlichungstag der Anmeldung:
**19.10.2016 Patentblatt 2016/42**

(73) Patentinhaber: **Northrop Grumman LITEF GmbH 79115 Freiburg (DE)**

(72) Erfinder: **RUF, Markus 79183 Waldkirch (DE)**

(74) Vertreter: **Müller Hoffmann & Partner Patentanwälte mbB St.-Martin-Strasse 58 81541 München (DE)**

(56) Entgegenhaltungen:
**EP-A1- 1 343 261      US-A1- 2009 164 827**

• **DAEJIN PARK ET AL: "A low-power sync processor with a floating-point timer and universal edge tracer for 3DTV active shutter glasses", COOL CHIPS XIV, 2011 IEEE, IEEE, 20. April 2011 (2011-04-20), Seiten 1-3, XP031993829, DOI: 10.1109/COOLCHIPS.2011.5890924 ISBN: 978-1-61284-883-9**

**Beschreibung**

Bei der Übertragung von Daten zwischen zwei Geräten oder Einheiten, die mit unterschiedlichen Taktfrequenzen arbeiten, ist neben der Sicherstellung der Übertragung aller Daten auch eine Synchronisation der beiden Takte wichtig.

Die EP 1 343 261 A1 offenbart ein System zum Extrahieren und Desynchronisieren eines aus einem Multiplexsignal stammenden Signals mit dessen ursprünglichen Datenrate. Dazu werden Signalbits aus dem Multiplexsignal in einem Pufferspeicher zwischengespeichert und mit einer Auslesefrequenz wieder ausgelesen. Die Auslesefrequenz wird basierend auf einem Vergleich der Lese- und Schreibraten des Pufferspeichers in Synchronisation mit der Frame-Rate eingestellt.

Bei einer Übertragung von Daten können beispielsweise in einer ersten Einheit Daten mit einer ersten Taktfrequenz erzeugt werden, die dann von einer zweiten Einheit mit einer zweiten Taktfrequenz, die von der ersten Taktfrequenz verschieden ist, ausgelesen oder abgefragt werden. So werden zum Beispiel in Sensoren Teilinkremente mit einem Datenpfadtakt erzeugt und zunächst akkumuliert. Eine Ausleseeinheit liest den momentanen Stand des Akkumulators mit einem Abfragetakt, so dass im jeweiligen Abfragetakt ein in einem Akkumulationsintervall erzeugtes Gesamtinkrement vom Sensor an die Ausleseeinheit übertragen wird.

Das Gesamtinkrement wird durch Akkumulation über eine ganzzahlige Anzahl von Datenpfadtakten gebildet. Wenn der Abfragetakt kein ganzzahliges Vielfaches des Datenpfadtaktes ist, wird diese ganzzahlige Anzahl von Datenpfadtakten aber nicht konstant sein. Die Anzahl der Datenpfadtakte wird vielmehr so zwischen zwei ganzzahligen Werten N und N+1 wechseln, dass das sich einstellende Mittel zwischen den N und N+1 Werten dem Verhältnis von Frequenz des Datenpfadtaktes zu Frequenz des Abfragetaktes entspricht. Und selbst wenn der Abfragetakt ein ganzzahliges Vielfaches des Datenpfadtaktes ist, können schon kleinste Abweichungen in den Frequenzen des Datenpfadtaktes oder des Abfragetaktes zu Schwebungseffekten in der Anzahl der Datenpfadtakte führen.

Damit kann zwar das sogenannte integrale Fehlerkriterium, das angibt, wie gut die Teilinkremente in den Gesamtinkrementen erfasst werden, erfüllt werden, so dass nach einer gewissen Anzahl von Abfragetakten alle mit dem Datenpfadtakt erzeugte Teilinkremente übertragen worden sind. Jedoch wird der Wechsel in der Anzahl der in einem ausgelesenen Gesamtinkrement enthaltenen Teilinkremente in der Ausleseeinheit als zusätzliches Rauschen interpretiert. Das ausgelesene Gesamtinkrement entspricht nicht vollständig der Integration der Daten über den Abfragetakt, wodurch das sogenannte differentielle Fehlerkriterium, das diese Eigenschaft beschreibt, nur unzureichend erfüllt ist.

Jedoch wird der Wechsel in der Anzahl der in einem ausgelesenen Gesamtinkrement enthaltenen Teilinkremente in der Ausleseeinheit als zusätzliches Rauschen interpretiert. Das ausgelesene Gesamtinkrement entspricht nicht vollständig der Integration der Daten über den Abfragetakt, wodurch das sogenannte differentielle Fehlerkriterium, das diese Eigenschaft beschreibt, nur unzureichend erfüllt ist.

Es ist daher Aufgabe der vorliegenden Erfindung, ein Verfahren sowie eine Vorrichtung zur Übertragung von Daten an einem asynchronen Übergang zwischen zwei Domänen mit unterschiedlichen Taktfrequenzen zur Verfügung zu stellen, die sowohl das integrale Fehlerkriterium erfüllen als auch das differentielle Fehlerkriterium verbessern.

Diese Aufgabe wird gelöst durch ein Verfahren und eine Vorrichtung gemäß der unabhängigen Ansprüche. Bevorzugte Ausführungsformen finden sich in den Unteransprüchen.

Ausführungsformen des erfindungsgemäßen Verfahrens und der erfindungsgemäßen Vorrichtung werden im Folgenden anhand der Figuren näher erläutert, wobei gleichartige Elemente mit gleichen Bezugszeichen gekennzeichnet sind.

Die Figur 1A zeigt den zeitlichen Verlauf der Datenpfadtakte sowie die im Akkumulator akkumulierten Teilinkremente.

Die Figur 1B zeigt den zeitlichen Verlauf der Abfragetakte sowie das im jeweiligen Abfragetakt ausgelesene Gesamtinkrement.

Die Figur 2 zeigt das erfindungsgemäße Verfahren in einer exemplarischen Form.

Die Figur 3 zeigt eine erste Ausführungsform des Schrittes zum Erzeugen des zweiten Gesamtinkrements, die entweder eine Extrapolation oder eine Interpolation des momentan abgefragten Gesamtinkrements umfasst.

Die Figur 4 zeigt eine zweite Ausführungsform des Schrittes zum Erzeugen des zweiten Gesamtinkrements, bei der eine Verzögerung von einem Abfragetakt zwischen dem Abfragen eines ersten Gesamtinkrements und dem Übertragen des daraus erzeugten zweiten Gesamtinkrements auftritt.

Die Figur 5 zeigt die erfindungsgemäße Vorrichtung sowie die erste Einheit und die zweite Einheit in einer exemplarischen Form.

Die Figur 6 zeigt eine erste Ausführungsform der erfindungsgemäßen Vorrichtung, die zur Ausführung der ersten Ausführungsform des erfindungsgemäßen Verfahrens geeignet ist.

Die Figur 7 zeigt eine zweite Ausführungsform der erfindungsgemäßen Vorrichtung, die zur Ausführung der zweiten Ausführungsform des erfindungsgemäßen Verfahrens geeignet ist.

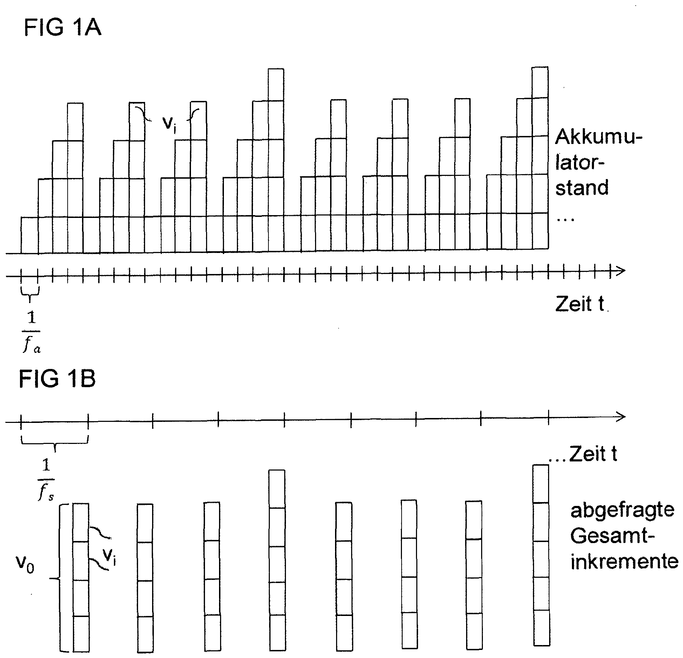

Die Figuren 1A und 1B dienen zur Verdeutlichung des der vorliegenden Erfindung zugrundeliegenden Problems. In Figur 1A sind der zeitliche Verlauf der Datenpfadtakte mit der ersten Frequenz $f_a$ sowie der zu jedem Datenpfadtakt gehörende Akkumulatorstand, das heißt die Anzahl der im Akkumulator akkumulierten Teilinkremente $v_i$, dargestellt, während in Figur 1B der zeitliche Verlauf der Abfragetakte mit der zweiten Frequenz $f_s$ sowie das in einem jeweiligen Abfragetakt abgefragte oder ausgelesene Gesamtinkrement $v_0$ dargestellt sind. Beispielhaft wurden die erste Frequenz $f_a$ mit 3,4 kHz und die zweite Frequenz $f_s$ mit 800 Hz ange-nommen. Demnach besteht ein Abfragetakt aus

$$\overline{N} = \frac{\hat{f_a}}{f_s} = 4,25 \text{ Datenpfadtakten.}$$

Weil nur über eine ganze Zahl von Datenpfadtakten akkumuliert werden kann, wird zur vollständigen Übertragung aller Daten dreimal über vier Datenpfadtakte und einmal über fünf Datenpfadtakte akkumuliert. Das heißt, die Anzahl der in einem Gesamtinkrement $v_0$ enthaltenen Teilinkremente $v_i$ variiert zwischen 4 und 5. Dieses Muster wiederholt sich periodisch, im dargestellten Fall beträgt die Periodendauer dieses Musters vier Abfragetakte. Die Aufeinanderfolge der Werte 4 und 5 für die Anzahl der in einem Gesamtinkrement $v_0$ enthaltenen Teilinkremente $v_i$ stellt sich dabei so ein, dass die Zahl der Umschaltungen zwischen beiden Werten maximal wird.

Mögliche Fehlerarten, die bei dieser Art der Datenabfrage und Integration auftreten können, werden in zwei Klassen unterteilt: Zum Ersten in das integrale Fehlerkriterium, das beurteilt, wie gut die Teilinkremente $v_i$ in den Gesamtinkrementen $v_0$ erfasst werden, und zum Zweiten in das differentielle Fehlerkriterium, das beurteilt, wie gut ein Gesamtinkrement $v_0$ der Integration über einen Abfragetakt entspricht.

In dem dargestellten Beispiel wird das integrale Fehlerkriterium vollständig, das differentielle Fehlerkriterium jedoch nur unzureichend erfüllt, was als ein zusätzliches Rauschen der Daten in der abfragenden Einheit interpretiert wird. Daher soll mit Hilfe des erfindungsgemäßen Verfahrens das differentielle Fehlerkriterium verbessert werden, während das integrale Fehlerkriterium weiterhin erfüllt bleibt.

Für die Erläuterung des erfindungsgemäßen Verfahrens werden folgende Symbole eingeführt:

$t_s$      das zur zweiten Frequenz $f_s$ gehörende nominale Zeitinkrement;

$t_0(k)$      das zum momentan abgefragten ersten Gesamtinkrement gehörende Zeitinkrement;

$t_1(k)$      das zum vorherigen ersten Gesamtinkrement gehörende Zeitinkrement;

$t_{1r}(k)$      der im vorherigen Schritt zum Erzeugen eines zweiten Gesamtinkrements noch nicht verarbeitete Restanteil des zum vorherigen ersten Gesamtinkrement gehörenden Zeitinkrements $t_1(k)$;

$v_0(k)$      das im momentanen Schritt zum Abfragen eines ersten Gesamtinkrements abgefragte erste Gesamtinkrement;

$v_1(k)$      das im vorherigen Schritt zum Abfragen eines ersten Gesamtinkrements abgefragte vorherige erste Gesamtinkrement;

$v_r(k)$      der im vorherigen Schritt zum Erzeugen eines zweiten Gesamtinkrements verwendete extrapolierte Anteil, der im momentanen Schritt zum Erzeugen eines zweiten Gesamtinkrements als Korrekturinkrement berücksichtigt werden muss;

$v_2(k)$      das im vorvorherigen Schritt zum Abfragen eines ersten Gesamtinkrements abgefragte vorvorherige erste Gesamtinkrement;

$t_2(k)$      das zum vorvorherigen ersten Gesamtinkrement gehörende Zeitinkrement;

$t_{2r}(k)$      der in den bisherigen Schritten zum Erzeugen eines zweiten Gesamtinkrements noch nicht verarbeitete Restanteil des zum vorvorherigen ersten Gesamtinkrement gehörenden Zeitinkrements $t_2(k)$;

$v(k)$      das auf das nominale Zeitinkrement $t_s$ angepasste zweite Gesamtinkrement.

Der Begriff "Inkrement" wird als Synonym für eine Differenz eines Dateninhalts zwischen einem Endwert und einem Anfangswert verwendet. Beispielsweise steht der Begriff "Gesamtinkrement" für die Differenz eines Dateninhalts, wobei der Anfangswert des Dateninhalts am Beginn eines Zeitintervalls und der Endwert des Dateninhalts am Ende des Zeitintervalls bestimmt werden. Das entsprechende Zeitintervall wird als zugehöriges Zeitinkrement bezeichnet. Ein Dateninhalt kann beispielsweise eine Messgröße sein.

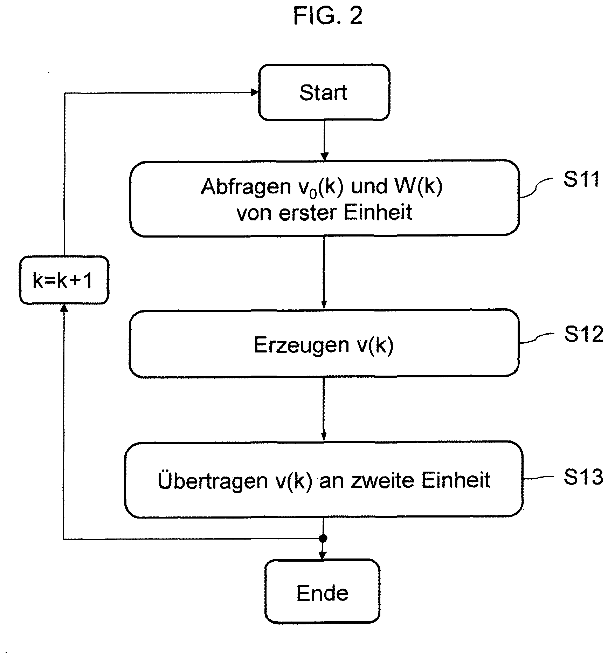

Die Figur 2 zeigt das erfindungsgemäße Verfahren in einer exemplarischen Form als Blockdiagramm. Nach dem Start des Verfahrens wird in einem ersten Schritt S11 ein erstes Gesamtinkrement $v_0(k)$ sowie ein erster Wert $W(k)$ von einer ersten Einheit abgefragt. In der ersten Einheit werden Daten, auch als Teilinkremente einer Größe bezeichnet, mit einer ersten Frequenz $f_a$, die auch Datenpfadfrequenz genannt wird, akkumuliert. Beispielsweise kann die erste Einheit ein Sensor sein, der Messwerte mit der ersten Frequenz $f_a$ erfasst oder erzeugt und diese in einem Akkumulator fortlaufend akkumuliert. Eine ganzzahlige Anzahl von akkumulierten Teilinkrementen bildet das erste Gesamtinkrement $v_0(k)$, wobei das erste Gesamtinkrement $v_0(k)$ dem Dateninhalt des zum momentanen Abfragezeitpunkt k in der ersten Einheit vorliegenden Datenblocks, mit anderen Worten dem Dateninhalt der akkumulierten Teilinkremente, entspricht.

Die Akkumulation der Daten ermöglicht eine Glättung der Daten oder Messwerte über ein Akkumulationsintervall.

Darüber hinaus erzeugt die erste Einheit den ersten Wert W(k), der ein zum ersten Gesamtinkrement $v_0(k)$ gehörendes Zeitinkrement $t_0(k)$ repräsentiert. Dieser erste Wert W(k) kann beispielsweise ein Zählerstand des Akkumulators sein, der die Anzahl der im ersten Gesamtinkrement $v_0(k)$ enthaltenen Teilinkremente wiedergibt und aus dem sich durch Multiplikation mit dem Datenpfadtakt $t_a = 1/f_a$ das zum ersten Gesamtinkrement $v_0(k)$ gehörende Zeitinkrement $t_0(k)$ berechnen lässt. Jedoch kann der erste Wert W(k) auch direkt das zum ersten Gesamtinkrement $v_0(k)$ gehörende Zeitinkrement $t_0(k)$ sein. Das Zeitinkrement $t_0(k)$ entspricht dem Akkumulationsintervall, wobei das Akkumulationsintervall die Zeitdauer zwischen dem Zeitpunkt der Erzeugung des letzten Teilinkrements, das im vorherigen Schritt zum Abfragen des ersten Gesamtinkrements enthalten war, und dem Zeitpunkt der Erzeugung des letzten im momentanen Schritt zum Abfragen des ersten Gesamtinkrements abgefragten Teilinkrements ist. Damit ist das Akkumulationsintervall immer ein ganzzahliges Vielfaches des Datenpfadtaktes $t_a$.

Nach dem Abfragen des ersten Gesamtinkrements $v_0(k)$ wird der Akkumulatorinhalt in der ersten Einheit auf 0 gesetzt. Auch wird der erste Wert W(k) für die Bestimmung des ersten Wertes W(k+1) im nächsten Abfrageschritt definiert. Beispielsweise kann der Zählerstand des Akkumulators auf 0 gesetzt werden.

In einem zweiten Schritt S12 des erfindungsgemäßen Verfahrens wird aus dem ersten Gesamtinkrement $v_0(k)$ unter Nutzung des ersten Wertes W(k) ein zweites Gesamtinkrement $v(k)$ erzeugt, wobei das zweite Gesamtinkrement dem Dateninhalt eines auf ein nominales Zeitinkrement $t_s$ angepassten Datenblocks entspricht. Das nominale Zeitinkrement $t_s$ entspricht einem Integrationsintervall, wobei das Integrationsintervall die Zeitdauer zwischen dem Zeitpunkt der Ausführung des vorherigen Schrittes zum Abfragen des ersten Gesamtinkrements und dem Zeitpunkt der Ausführung des momentanen Schrittes zum Abfragen des ersten Gesamtinkrements ist. Damit entspricht das nominale Zeitinkrement $t_s$ einem Abfragetakt mit $t_s = 1/f_s$, wobei $f_s$ eine zweite Frequenz ist, mit der eine zweite Einheit die in der ersten Einheit akkumulierten Daten abfragt. Die zweite Frequenz $f_s$ und damit das nominale Zeitinkrement $t_s$ werden im Allgemeinen vorgegeben und als konstant angenommen. Jedoch ist es auch möglich, den konkreten Wert von $t_s$ zu bestimmen und diesen als momentanen Wert von $t_s$ in die Berechnung des zweiten Gesamtinkrements einzubeziehen.

In einem dritten Schritt S13 wird das erzeugte zweite Gesamtinkrement $v(k)$ an die zweite Einheit übertragen. Die zweite Einheit kann beispielsweise eine Auswerteeinheit oder eine weiterverarbeitende Einheit sein, die die in der ersten Einheit erzeugten oder erfassten Daten auswertet oder weiterverarbeitet und dabei die Daten aus der ersten Einheit mit der zweiten Frequenz $f_s$ abfragt.

Wie in Figur 2 dargestellt können die Schritte zum Abfragen des ersten Gesamtinkrements $v_0(k)$ und des ersten Wertes W(k), zum Erzeugen des zweiten Gesamtinkrements $v(k)$ sowie zum Übertragen des zweiten Gesamtinkrements $v(k)$ wiederholt mit der zweiten Frequenz $f_s$ ausgeführt werden, wobei sich der Index k jeweils um 1 erhöht.

Das erfindungsgemäße Verfahren führt bei beliebigem Verhältnis von erster Frequenz $f_a$ zu zweiter Frequenz $f_s$ ($f_a/f_s > 1$) zu einer Verbesserung des differentiellen Fehlerkriteriums, wobei das integrale Fehlerkriterium trotzdem erfüllt bleibt.

Dies gilt speziell auch für den Fall, dass die erste Frequenz $f_a$ gleich einem ganzzahligen Vielfachen der zweiten Frequenz $f_s$ ist.

Das erfindungsgemäße Verfahren weist die erwähnten Vorteile auch auf für den Fall, dass das normalerweise starre Frequenzverhältnis $f_a/f_s$ von erster Frequenz $f_a$ zu zweiter Frequenz $f_s$ zeitlich begrenzt variiert. Dies kann beispielsweise durch einen Jitter, das heißt Schwankungen, in der ersten Frequenz $f_a$ oder in der zweiten Frequenz $f_s$ verursacht werden.

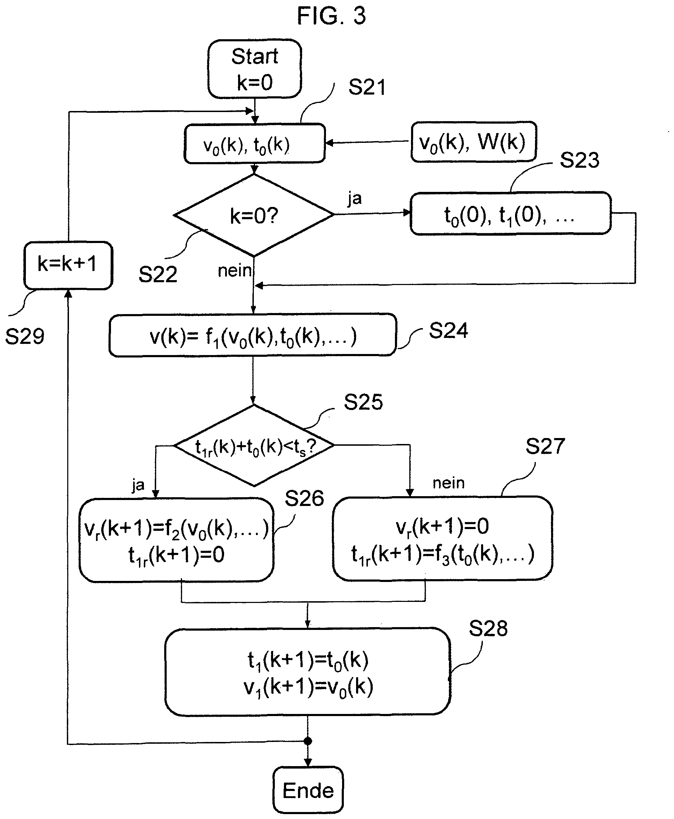

In Figur 3 ist der Schritt zum Erzeugen eines zweiten Gesamtinkrements gemäß einer ersten Ausführungsform des Verfahrens als Flussdiagram dargestellt. Nach dem Start des Verfahrens, bei dem der Index k auf Null gesetzt wird, werden zunächst in Schritt S21 das erste Gesamtinkrement $v_0(k)$ und der erste Wert W(k) von der ersten Einheit abgefragt und, falls der erste Wert W(k) nicht dem zum ersten Gesamtinkrement gehörenden Zeitinkrement $t_0(k)$ direkt entspricht, wird das zum ersten Gesamtinkrement $v_0(k)$ gehörende Zeitinkrement $t_0(k)$ aus W(k) berechnet.

Danach wird in Schritt S22 entschieden, ob der Index k gleich 0 ist oder nicht. Für den Fall, dass k=0 ist, werden in Schritt S23 folgende Startwerte für das Erzeugen des zweiten Gesamtinkrements $v(k)$ festgelegt:

$$t_0(0) = t_s \qquad (1),$$

$$t_1(0) = t_s \qquad (2),$$

$$t_{1r}(0) = 0 \qquad (3),$$

$$v_1(0) = 0 \qquad (4)$$

und

$$v_r(0) = 0 \qquad (5).$$

Im nächsten Schritt S24 wird das zweite Gesamtinkrement wie folgt berechnet:

$$v(k) = v_1(k) \cdot \frac{t_{1r}(k)}{t_1(k)} + v_0(k) \cdot \frac{t_s - t_{1r}(k)}{t_0(k)} - v_r(k) \qquad (6).$$

Dabei repräsentiert der erste Summand einen eventuell noch nicht verarbeiteten Restanteil aus dem vorherigen Integrationsintervall, der zweite Summand den größten oder den kompletten Anteil aus dem aktuellen Integrationsintervall sowie eventuell eine extrapolierte Anleihe auf das noch unbekannte nächste Integrationsintervall und der letzte Summand beziehungsweise der Subtrahend ein Korrekturinkrement, das eine eventuell im vorherigen Schritt zum Erzeugen eines zweiten Gesamtinkrements verwendete extrapolierte Anleihe auf das momentane Integrationsintervall berücksichtigt. Damit entspricht das zweite Gesamtinkrement der Summe aus gegebenenfalls einem im vorherigen Schritt zum Erzeugen eines zweiten Gesamtinkrements noch nicht verarbeiteten Restanteil, zumindest einem Teil des im momentanen Schritt zum Abfragen eines ersten Gesamtinkrements abgefragten ersten Gesamtinkrements, gegebenenfalls einem in den nächsten Schritt extrapolierten Anteil des aktuellen Gesamtinkrements, und gegebenenfalls einem Korrekturinkrement, das dem Negativen des im vorherigen Schritt zum Erzeugen eines zweiten Gesamtinkrements verwendeten extrapolierten Anteils entspricht.

Um dies näher zu erläutern, wird eine Fallunterscheidung bezüglich der Länge des nominalen Zeitinkrements $t_s$ gegenüber der Summe aus dem zum im vorherigen Schritt zum Erzeugen eines zweiten Gesamtinkrements noch nicht verarbeiteten Restanteil $t_{1r}(k)$ des zum vorherigen ersten Gesamtinkrement gehörenden Zeitinkrements und dem zum momentan abgefragten ersten Gesamtinkrement gehörenden Zeitinkrement $t_0(k)$ vorgenommen.

Für den Fall, dass $t_{1r}(k) + t_0(k) < t_s$ ist, wird eine Extrapolation des ersten Gesamtinkrements $v_0(k)$ auf das nächste abzufragende erste Gesamtinkrement durchgeführt. Diese Extrapolation beruht auf der Annahme, dass das nächste abzufragende erste Gesamtinkrement den gleichen Wert haben wird wie das momentan abgefragte erste Gesamtinkrement. Mit Hilfe dieser Extrapolation wird das zum momentan abgefragten ersten Gesamtinkrement gehörende Zeitinkrement $t_0(k)$ bis an das Ende des nominalen Zeitinkrements $t_s$ verlängert, so dass im Ergebnis $t_{1r}(k) + t_0'(k) = t_s$ ist, wobei $t_0'(k)$ das verlängerte Zeitinkrement $t_0(k)$ ist.

Der extrapolierte Anteil des zweiten Gesamtinkrements entspricht dem Korrekturinkrement des nächsten Schrittes zum Erzeugen eines zweiten Gesamtinkrements. Da das gesamte zum momentanen ersten Gesamtinkrement gehörende Zeitinkrement $t_0(k)$ zur Erzeugung des zweiten Gesamtinkrements $v(k)$ beiträgt, fällt für den nächsten Schritt zum Erzeugen eines zweiten Gesamtinkrements kein noch nicht verarbeiteter Restanteil des momentan abgefragten ersten Gesamtinkrements an.

Für den Fall, dass $t_{1r}(k) + t_0(k) \geq t_s$ ist, wird eine Interpolation des ersten Gesamtinkrements $v_0(k)$ durchgeführt. Mit Hilfe dieser Interpolation wird das zum momentan abgefragten ersten Gesamtinkrement gehörende Zeitinkrement $t_0(k)$ bis an das Ende des nominalen Zeitinkrements $t_s$ verkürzt, so dass im Ergebnis $t_{1r}(k) + t_0'(k) = t_s$ ist, wobei $t_0'(k)$ das verkürzte Zeitinkrement $t_0(k)$ ist.

Damit fällt für den nächsten Schritt zum Erzeugen eines zweiten Gesamtinkrements ein noch nicht verarbeiteter Restanteil des momentan abgefragten ersten Gesamtinkrements an. Da es keinen extrapolierten Anteil des zweiten Gesamtinkrements gibt, muss im nächsten Schritt zum Erzeugen eines zweiten Gesamtinkrements kein Korrekturinkrement subtrahiert werden.

Wie beschrieben unterscheiden sich also der im nächsten Schritt zum Erzeugen eines zweiten Gesamtinkrements zu verwendete Restanteil $t_{1r}(k)$ und das im nächsten Schritt zum Erzeugen eines zweiten Gesamtinkrements zu verwendete Korrekturinkrement $v_r(k)$ für die beiden dargestellten Fälle. Daher erfolgt nach oder vor der Berechnung des zweiten Gesamtinkrements $v(k)$ in Schritt S25 eine Fallunterscheidung hinsichtlich der Länge des nominalen Zeitinkrements $t_s$ wie oben beschrieben. Davon abhängig werden im Schritt S26 beziehungsweise S27 die Zustandsübergänge, das heißt die im nächsten Schritt zum Erzeugen eines zweiten Gesamtinkrements zu verwendeten Werte von $v_r(k+1)$ und $t_{1r}(k+1)$, wie folgt bestimmt:

für den Fall, dass $t_{1r}(k) + t_0(k) < t_s$:

$$v_r(k+1) = v_0(k) \cdot \frac{t_s - t_{1r}(k) - t_0(k)}{t_0(k)} \qquad (7)$$

und

$$t_{1r}(k+1) = 0 \qquad (8),$$

für den Fall, dass $t_{1r}(k) + t_0(k) \geq t_s$:

$$v_r(k+1) = 0 \qquad (9)$$

und

$$t_{1r}(k+1) = t_0(k) + t_{1r}(k) - t_s \qquad (10).$$

Für beide Fälle gleich werden in Schritt S28 die beiden folgenden Zustandsübergänge, das heißt die im nächsten Schritt zum Erzeugen eines zweiten Gesamtinkrements zu verwendeten Werte von $t_1(k+1)$ und $v_1(k+1)$, wie folgt bestimmt:

$$t_1(k+1) = t_0(k) \qquad (11$$

und

$$v_1(k+1) = v_0(k) \qquad (12).$$

Solange das erfindungsgemäße Verfahren nicht beendet wird, wird nunmehr in Schritt S29 der Index k um 1 erhöht und die Schritte S21 bis S29 werden wiederholt, wobei der Gesamtprozess mit der zweiten Frequenz $f_s$ durchgeführt wird, das heißt einmal pro Abfragetakt.

Simulationen des in Figur 3 dargestellten Verfahrens unter Verwendung von echten Sensordaten als Teilinkremente ergab, dass nach einem Einschwingvorgang des Verfahrens das zweite Gesamtinkrement das integrale Fehlerkriterium auch im Falle jitterbehafteter Frequenzen $f_s$ und $f_a$ erfüllt und das differentielle Fehlerkriterium gegenüber dem ersten Gesamtinkrement deutlich verbessert wurde. Abweichungen des zweiten Gesamtinkrements von einem erwarteten Wert, die durch die im Verfahren durchgeführte Extrapolation verursacht wurden, gingen im Sensorrauschen unter.

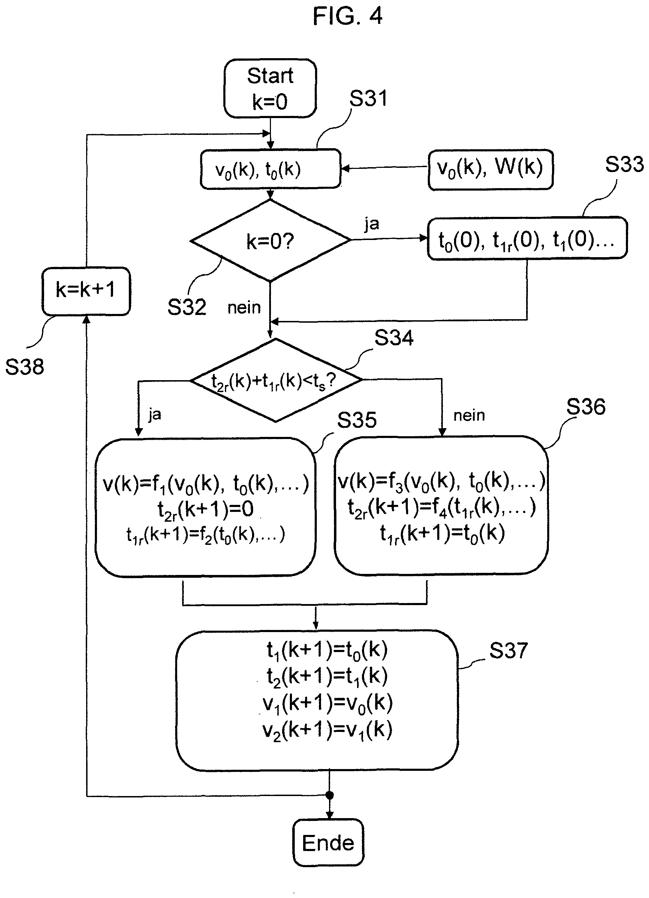

In Figur 4 ist der Schritt zum Erzeugen eines zweiten Gesamtinkrements gemäß einer zweiten Ausführungsform des Verfahrens als Flussdiagram dargestellt. Nach dem Start des Verfahrens, bei dem der Index k auf Null gesetzt wird, werden zunächst in Schritt S31 das erste Gesamtinkrement $v_0(k)$ und der erste Wert $W(k)$ von der ersten Einheit abgefragt und, falls der erste Wert $W(k)$ nicht dem zum ersten Gesamtinkrement gehörenden Zeitinkrement $t_0(k)$ direkt entspricht, wird das zum ersten Gesamtinkrement $v_0(k)$ gehörende Zeitinkrement $t_0(k)$ aus $W(k)$ berechnet.

Danach wird in Schritt S32 entschieden, ob der Index k gleich 0 ist oder nicht. Für den Fall, dass k=0 ist, werden in Schritt S33 folgende Startwerte für das Erzeugen des zweiten Gesamtinkrements $v(k)$ festgelegt:

$$t_0(0) = t_s \qquad (13),$$

$$t_1(0) = t_s \qquad (14),$$

$$t_2(0) = t_s \qquad (15),$$

$$t_{1r}(0) = t_s \qquad (16),$$

$$t_{2r}(0) = 0 \qquad (17),$$

$$v_1(0) = 0 \qquad (18)$$

und

$$v_2(0) = 0 \qquad (19).$$

Im nächsten Schritt S34 erfolgt eine Fallunterscheidung hinsichtlich der Länge des nominalen Zeitinkrements $t_s$ gegenüber der Summe aus dem in den bisherigen Schritten zum Erzeugen eines zweiten Gesamtinkrements noch nicht verarbeiteten Restanteil $t_{2r}(k)$ des zum vorvorherigen ersten Gesamtinkrement gehörenden Zeitinkrements und dem im vorherigen Schritt zum Erzeugen eines zweiten Gesamtinkrements noch nicht verarbeiteten Restanteil $t_{1r}(k)$ des zum vorherigen ersten Gesamtinkrement gehörenden Zeitinkrements.

Für den Fall, dass $t_{2r}(k) + t_{1r}(k) < t_s$ ist, wird das zweite Gesamtinkrement in Schritt S35 wie folgt berechnet:

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2 r(k)}{t_0(k)} \qquad (20).$$

Damit setzt sich das zweite Gesamtinkrement aus eventuell dem bisher noch nicht verarbeiteten Restanteil des vorvorherigen ersten Gesamtinkrements, das heißt aus dem vorvorherigen Integrationsintervall, aus dem kompletten noch nicht verarbeiteten Restanteil des vorherigen ersten Gesamtinkrements, das heißt aus dem vorherigen Integrationsintervall, sowie aus einem Anteil des momentanen ersten Gesamtinkrements aus dem aktuellen Integrationsintervall zusammen. Da der gesamte Restanteil des vorherigen ersten Gesamtinkrements zum zweiten Gesamtinkrement beiträgt, verbleibt kein Restanteil des vorherigen ersten Gesamtinkrements, der im nächsten Schritt zur Erzeugung eines zweiten Gesamtinkrements zu berücksichtigen wäre. Vom momentanen ersten Gesamtinkrement trägt bereits ein Anteil zum zweiten Gesamtinkrement bei, so dass im nächsten Schritt zur Erzeugung eines zweiten Gesamtinkrements nur noch ein Restanteil dieses ersten Gesamtinkrements zu berücksichtigen ist. Damit ergeben sich folgende Zustandsübergänge für den nächsten Schritt zum Erzeugen eines zweiten Gesamtinkrements, die ebenfalls in Schritt S35 berechnet werden:

$$t_{2r}(k+1) = 0 \qquad (21)$$

und

$$t_{1r}(k+1) = t_0(k) - (t_s - t_{2r}(k) - t_{1r}(k)) \qquad (22).$$

Für den Fall, dass $t_{2r}(k) + t_{1r}(k) \geq t_s$ ist, wird das zweite Gesamtinkrement in Schritt S36 wie folgt berechnet:

$$v(k) = v_2(k) \cdot \frac{t_{2r}(k)}{t_2(k)} + v_1(k) \cdot \frac{t_s - t_{2r}(k)}{t_1(k)} \qquad (23).$$

Damit setzt sich das zweite Gesamtinkrement aus eventuell dem bisher noch nicht verarbeiteten Restanteil des vorvorherigen ersten Gesamtinkrements, das heißt aus dem vorvorherigen Integrationsintervall, sowie aus dem größten Teil des vorherigen ersten Gesamtinkrements, das heißt aus dem vorherigen Integrationsintervall, zusammen. Da nur ein Teil des vorherigen ersten Gesamtinkrements zum zweiten Gesamtinkrement beiträgt, verbleibt ein Restanteil des vorherigen ersten Gesamtinkrements, der im nächsten Schritt zur Erzeugung eines zweiten Gesamtinkrements zu berücksichtigen ist. Vom momentanen ersten Gesamtinkrement trägt noch kein Teil zum zweiten Gesamtinkrement bei, so dass im nächsten Schritt zur Erzeugung eines zweiten Gesamtinkrements der komplette Anteil des momentanen ersten Gesamtinkrements zu berücksichtigen ist. Damit ergeben sich folgende Zustandsübergänge für den nächsten Schritt zum Erzeugen eines zweiten Gesamtinkrements, die ebenfalls in Schritt S36 berechnet werden:

$$t_{2r}(k+1) = t_{1r}(k) + t_{2r}(k) - t_s \qquad (24)$$

und

$$t_{1r}(k+1) = t_0(k) \qquad (25).$$

Allgemein kann gesagt werden, dass das zweite Gesamtinkrement der Summe aus gegebenenfalls einem im vorvorherigen Schritt zum Erzeugen eines zweiten Gesamtinkrements noch nicht verarbeiteten Restanteil des im vorvorherigen Schritt zum Abfragen eines ersten Gesamtinkrements abgefragten vorvorherigen ersten Gesamtinkrements, aus zumindest einem Teil des im vorherigen Schritt zum Abfragen eines ersten Gesamtinkrements abgefragten vorherigen Gesamtinkrements sowie aus gegebenenfalls einem Teil des im momentanen Schritt zum Abfragen eines ersten Gesamtinkrements abgefragten ersten Gesamtinkrements entspricht. Damit tritt eine Verzögerung von einem Abfragetakt zwischen dem Schritt des Abfragens eines ersten Gesamtinkrements von der ersten Einheit und dem Schritt des Übertragens eines zu diesem abgefragten ersten Gesamtinkrement korrespondierenden zweiten Gesamtinkrements auf.

Für beide Fälle gleich werden in Schritt S37 die folgenden Zustandsübergänge, das heißt die im nächsten Schritt zum Erzeugen eines zweiten Gesamtinkrements zu verwendeten Werte, bestimmt:

$$t_1(k+1) = t_0(k) \qquad (26),$$

$$t_2(k+1) = t_1(k) \qquad (27),$$

$$v_1(k+1) = v_0(k) \qquad (28)$$

und

$$v_2(k+1) = v_1(k) \qquad (29).$$

Solange das erfindungsgemäße Verfahren nicht beendet wird, wird nunmehr in Schritt S38 der Index k um 1 erhöht und die Schritte S31 bis S38 werden wiederholt, wobei der Gesamtprozess mit der zweiten Frequenz $f_s$ durchgeführt wird, das heißt einmal pro Abfragetakt.

Simulationen des in Figur 4 dargestellten Verfahrens unter Verwendung von echten Sensordaten als Teilinkremente ergab, dass nach einem Einschwingvorgang des Verfahrens das zweite Gesamtinkrement sowohl das integrale Fehlerkriterium als auch das differentielle Fehlerkriterium auch im Falle jitterbehafteter Frequenzen $f_s$ und $f_a$ erfüllt.

Damit ist das in Figur 4 dargestellte Verfahren gegenüber dem in Figur 3 dargestellten Verfahren robuster gegenüber einem Jitter in der ersten Frequenz $f_a$ oder der zweiten Frequenz $f_s$. Jedoch ergibt sich eine Verzögerung von einem Abfragetakt $1/f_s$ zwischen dem ersten Gesamtinkrement und dem zu diesem gehörigen zweiten Gesamtinkrement, das heißt desjenigen zweiten Gesamtinkrements, in dem das erste Gesamtinkrement zumindest zum Teil enthalten ist. Damit ist das in Figur 4 dargestellte Verfahren besonders für Verfahren zur Übertragung von Daten geeignet, bei denen eine solche Verzögerung entweder keine Rolle spielt oder bei denen eine solche Verzögerung bei der weiteren Verarbeitung der Daten berücksichtigt werden kann.

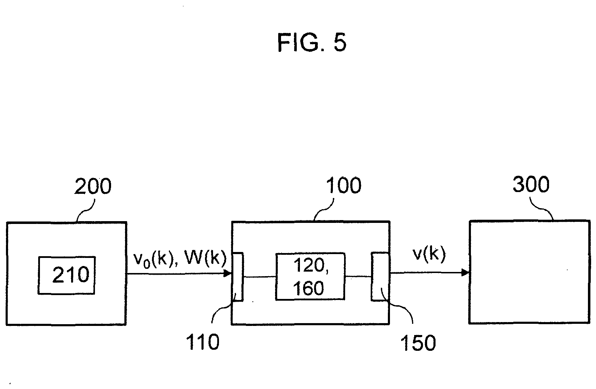

Die Figur 5 zeigt eine Vorrichtung 100, die geeignet ist, das in Figur 2 beschriebene Verfahren auszuführen, sowie eine erste Einheit 200 und eine zweite Einheit 300 in einer schematischen Form.

Die erste Einheit 200 umfasst einen Akkumulator 210, der Daten oder Teilinkremente, die mit einer ersten Frequenz $f_a$ erzeugt oder erfasst wurden, akkumuliert und ein erstes Gesamtinkrement $v_0(k)$ sowie einen ersten Wert W(k), der das zum ersten Gesamtinkrement gehörende Zeitinkrement $t_0(k)$, das heißt das Akkumulationsintervall, repräsentiert, bereitstellt. Die erste Einheit 200 kann beispielsweise ein Sensor sein, der die Daten oder Teilinkremente mit der ersten Frequenz $f_a$, dem Datenpfadtakt, erzeugt und in diesem Falle weitere Einheiten, beispielsweise Messeinheiten und/oder Verarbeitungseinheiten, umfasst. Beispiele für einen solchen Sensor sind unter anderem Drehraten- oder Beschleunigungssensoren. Bei Drehratensensoren stellen die Teilinkremente Teilwinkelinkremente dar, während bei Beschleunigungssensoren die Teilinkremente Teilgeschwindigkeitsinkremente sind. Alternativ kann die erste Einheit 200 die Daten oder Teilinkremente auch von einer weiteren Einheit mit der ersten Frequenz $f_a$ abfragen und im Akkumulator 210 akkumulieren.

Die erfindungsgemäße Vorrichtung 100 umfasst einen Eingang 110, der geeignet ist, das erste Gesamtinkrement $v_0(k)$ und den ersten Wert $W(k)$ von der ersten Einheit 200 mit einer zweiten Frequenz $f_s$ abzufragen oder zu empfangen, einen Filter 120 beziehungsweise 160, der geeignet ist, aus dem ersten Gesamtinkrement $v_0(k)$ unter Nutzung des ersten Wertes $W(k)$ ein zweites Gesamtinkrement $v(k)$ zu erzeugen, und einen Ausgang 150, der geeignet ist, das zweite Gesamtinkrement $v(k)$ an die zweite Einheit 300 mit der zweiten Frequenz $f_s$ zu übertragen.

Die zweite Einheit 300 kann eine Auswerte- und Anzeigeeinheit oder eine beliebige Art von weiterverarbeitender Einheit sein, die das von der Vorrichtung 100 übertragene zweite Gesamtinkrement mit der zweiten Frequenz $f_s$ abfragt oder empfängt und entsprechend auswertet, anzeigt und/oder weiterverarbeitet.

Die Vorrichtung 100 ermöglicht das Synchronisieren der mit der ersten Frequenz $f_a$ erzeugten Daten auf die zweite Frequenz $f_s$. Damit können die mit der ersten Frequenz $f_a$ erzeugten Daten exakt in einem Abfragetakt der zweiten Frequenz $f_s$ repräsentiert werden. Insbesondere ermöglicht die Vorrichtung 100 die Einhaltung des integralen Fehlerkriteriums und die Verbesserung des differentiellen Fehlerkriteriums für voneinander unabhängige erste und zweite Frequenzen $f_a$ und $f_s$.

Die Vorrichtung 100 ist in Figur 5 als selbständige Einheit, die zwischen der ersten Einheit 200 und der zweiten Einheit 300 angeordnet ist, dargestellt. Jedoch ist es auch möglich, dass die Vorrichtung 100 in der ersten Einheit 200 oder in der zweiten Einheit 300 integriert ist, wodurch entsprechend der Eingang 110 oder der Ausgang 150 entfallen können.

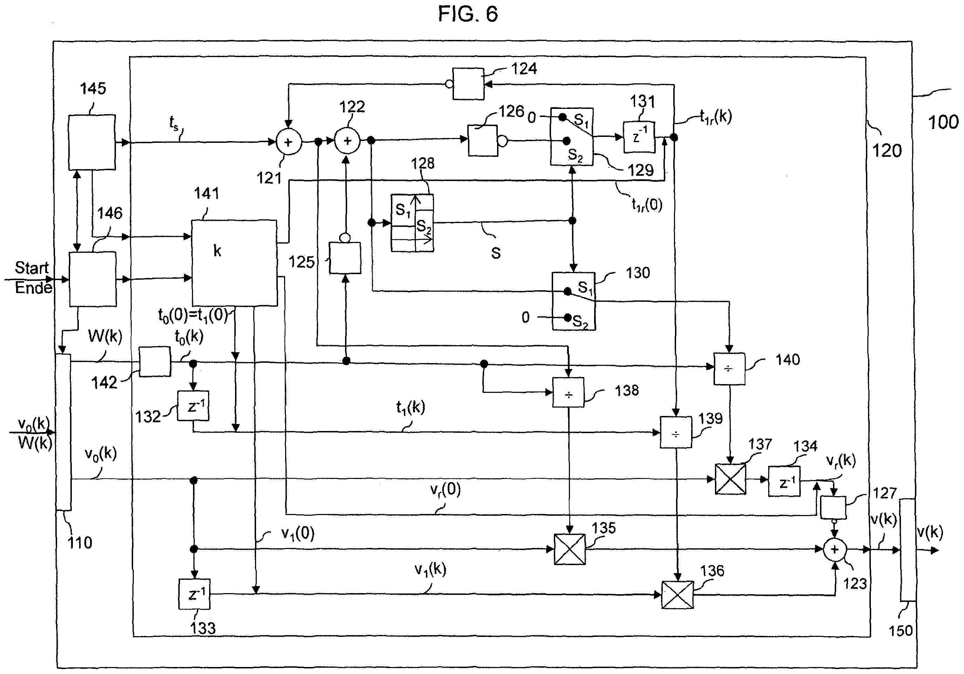

Die Figur 6 zeigt eine erste Ausführungsform der erfindungsgemäßen Vorrichtung 100, die geeignet ist, die mit Bezug auf die Figur 3 beschriebene erste Ausführungsform des erfindungsgemäßen Verfahrens auszuführen.

Neben dem bereits erwähnten Eingang 110 und dem Ausgang 150 weist diese Ausführungsform einen Filter 120, einen Speicher 145 und einen Taktgeber 146 auf. Der Taktgeber 146 kann von außerhalb der Vorrichtung 100 ein Start- oder ein End-Signal erhalten und steuert dann mit der zweiten Frequenz $f_s$ die Abfrage des ersten Gesamtinkrements $v_0(k)$ und des ersten Wertes $W(k)$ von der ersten Einheit 200 sowie die Festlegung des Indexes k. Das Start- und Ende-Signal kann von der ersten Einheit 200, der zweiten Einheit 300 oder von einem anderen Gerät oder einem Nutzer bereitgestellt werden.

Im Speicher 145 sind die Anfangswerte für die im Filter 120 zur Berechnung des zweiten Gesamtinkrements $v(k)$ notwendigen Größen gespeichert und werden bei Empfang des Start-Signals dem Filter 120 zur Verfügung gestellt. Darüber hinaus kann die zweite Frequenz $f_s$ im Speicher 145 gespeichert sein. Die zweite Frequenz $f_s$ beziehungsweise das daraus resultierende nominale Zeitinkrement $t_s$ kann aber auch von der zweiten Einheit 300 direkt bereitgestellt oder aus einem von der zweiten Einheit 300 gesendeten Signal bestimmt werden. Die Anfangswerte sowie das nominale Zeitinkrement werden vom Speicher 145 und/oder von außen dem Filter 120 zugeführt.

Der Filter weist einen Zähler 141 auf, der den aktuellen Wert des Indexes k bereitstellt. Bei Erhalt eines Start-Signals vom Taktgeber 146 wird der Index k im Zähler 141 auf Null gesetzt und bei jedem weiteren vom Taktgeber 146 vorgegebenen Takt um 1 erhöht. Ist der Wert des Indexes k gleich Null, so stellt der Zähler 141 die Anfangswerte, das heißt $t_{1r}(0)$, $t_0(0)$, $t_1(0)$, $v_1(0)$ und $v_r(0)$, den entsprechenden Komponenten des Filters, die nachstehend genauer beschrieben werden, zur Verfügung.

Es ist möglich, dass die Funktionalitäten verschiedener Komponenten der Vorrichtung 100, beispielsweise des Speichers 145, des Taktgebers 146 und/oder des Zählers 141, in einer oder mehreren Komponenten gemeinsam realisiert werden. Weiterhin ist es auch möglich, dass der Takt zum Abfragen des ersten Gesamtinkrements und des ersten Wertes sowie zum Erhöhen des Indexes k von außen, das heißt von außerhalb der Vorrichtung 100, zugeführt wird, so dass die Vorrichtung 100 keinen Taktgeber enthalten muss.

Der Filter 120 umfasst eine Berechnungseinheit 142, die geeignet ist, aus dem abgefragten ersten Wert $W(k)$ das zum ersten Gesamtinkrement $v_0(k)$ gehörende Zeitinkrement $t_0(k)$ zu berechnen. Entspricht der erste Wert $W(k)$ bereits dem Zeitinkrement $t_0(k)$, so kann die Berechnungseinheit 142 auch entfallen.

Zur Berechnung des zweiten Gesamtinkrements $v(k)$ sowie der Zustandsübergänge $t_1(k+1)$, $v_1(k+1)$, $v_r(k+1)$ und $t_{1r}(k+1)$ umfasst der Filter 120 weiterhin Addierer 121 bis 123, Inverter 124 bis 127, ein Zweipunktglied 128, Schaltglieder 129 und 130, Verzögerungseinheiten 131 bis 134, Multiplizierer 135 bis 137 sowie Dividierer 138 bis 140. Das Zweipunktglied 128 stellt ein Signal S am Ausgang bereit und ermöglicht die Fallunterscheidung hinsichtlich der Länge des nominalen Zeitinkrements $t_s$ im Vergleich zur Summe aus $t_{1r}(k)$ und $t_0(k)$. Für den Fall, dass $t_{1r}(k)+t_0(k) < t_s$ ist, nimmt das Signal S den Wert $S_1$ an, während für den Fall, dass $t_{1r}(k) + t_0(k) \geq t_s$ ist, das Signal S den Wert $S_2$ annimmt. Die Schaltglieder 129 und 130 nehmen jeweils die zum Signal S gehörenden Schalterstellungen an, so dass der Ausgang der Schaltglieder ein zu dem entsprechenden Fall gehörenden Wert annimmt. Die Verzögerungseinheiten 131 bis 134 stellen Zwischenspeicher dar, die einen Eingangswert mit einer Zeitverzögerung von einem Takt des Integrationsintervalls, das heißt mit einer Zeitverzögung von $t_s$, an den Ausgang weiterleiten. Damit steht der Eingangswert einer Verzögerungseinheit im nächsten Integrationsintervall am Ausgang zur weiteren Verarbeitung zur Verfügung.

Die genaue Verschaltung der einzelnen Komponenten des Filters 120 kann der Figur 6 entnommen werden. Damit ermöglicht der Filter 120 die Berechnung des zweiten Gesamtinkrements $v(k)$ sowie der Zustandsübergänge $t_1(k+1)$, $v_1(k+1)$, $v_r(k+1)$ und $t_{1r}(k+1)$ gemäß der Formeln (6), (7) und (8) beziehungsweise (9) und (10) sowie (11) und (12).

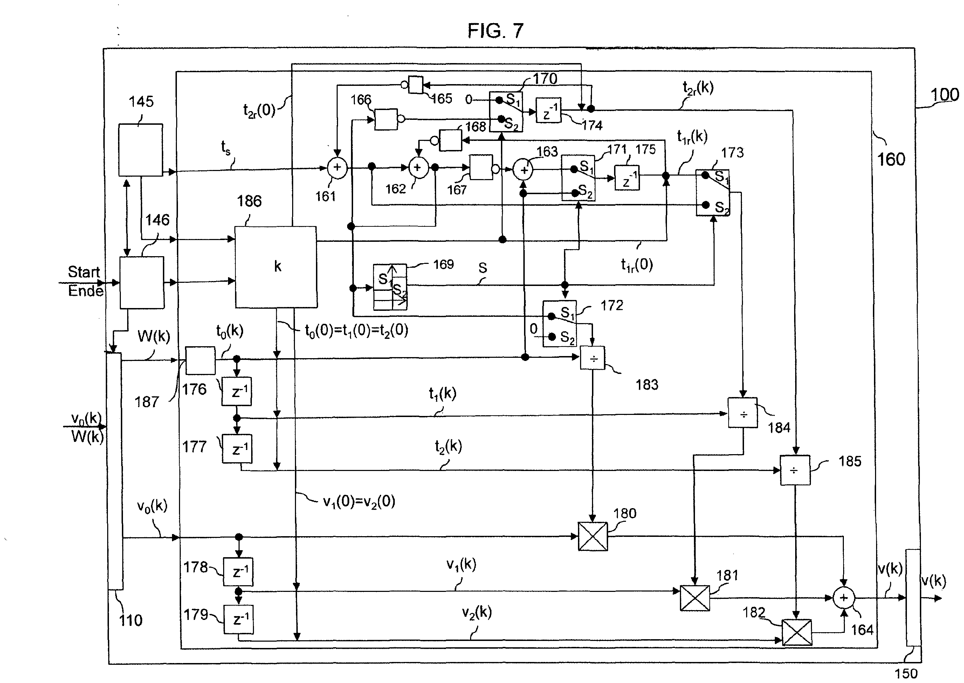

Die Figur 7 zeigt eine erste Ausführungsform der erfindungsgemäßen Vorrichtung 100, die geeignet ist, die mit Bezug auf die Figur 4 beschriebene zweite Ausführungsform des erfindungsgemäßen Verfahrens auszuführen.

Neben dem bereits erwähnten Eingang 110 und dem Ausgang 150 weist diese Ausführungsform einen Filter 160, einen Speicher 145 und einen Taktgeber 146 auf. Bezüglich des Speichers 145 und des Taktgebers 146 gelten die mit Bezug auf Figur 6 gemachten Aussagen.

Der Filter weist einen Zähler 186 auf, der den aktuellen Wert des Indexes k bereitstellt. Bei Erhalt eines Start-Signals vom Taktgeber 146 wird der Index k im Zähler 186 auf Null gesetzt und bei jedem weiteren vom Taktgeber 146 vorgegebenen Takt um 1 erhöht. Ist der Wert des Indexes k gleich Null, so stellt der Zähler 186 die Anfangswerte, das heißt $t_{2r}(0)$, $t_{1r}(0)$, $t_0(0)$, $t_2(0)$, $t_1(0)$, $v_1(0)$ und $v_2(0)$, den entsprechenden Komponenten des Filters, die nachstehend genauer beschrieben werden, zur Verfügung.

Es ist möglich, dass die Funktionalitäten verschiedener Komponenten der Vorrichtung 100, beispielsweise des Speichers 145, des Taktgebers 146 und/oder des Zählers 186, in einer oder mehreren Komponenten gemeinsam realisiert werden oder dass der Taktgeber 146 weggelassen werden kann, wie dies mit Bezug auf Figur 6 beschrieben ist.

Ähnlich wie mit Bezug auf Figur 6 beschrieben, kann der Filter 160 eine Berechnungseinheit 187 umfassen, die geeignet ist, aus dem abgefragten ersten Wert $W(k)$ das zum ersten Gesamtinkrement $v_0(k)$ gehörende Zeitinkrement $t_0(k)$ zu berechnen. Entspricht der erste Wert $W(k)$ bereits dem Zeitinkrement $t_0(k)$, so kann die Berechnungseinheit 187 auch entfallen.

Weiterhin umfasst der Filter 160 zur Berechnung des zweiten Gesamtinkrements $v(k)$ sowie der Zustandsübergänge $t_1(k+1)$, $t_2(k+l)$, $vi(k+l)$, $v_2(k+1)$, $t_{1r}(k+1)$ und $t_{2r}(k+1)$ Addierer 161 bis 164, Inverter 165 bis 168, ein Zweipunktglied 169, Schaltglieder 170 bis 173, Verzögerungseinheiten 174 bis 179, Multiplizierer 180 bis 182 sowie Dividierer 183 bis 185. Das Zweipunktglied 169 stellt ein Signal S am Ausgang bereit und ermöglicht die Fallunterscheidung hinsichtlich der Länge des nominalen Zeitinkrements $t_s$ im Vergleich zur Summe aus $t_{1r}(k)$ und $t_{2r}(k)$. Für den Fall, dass $t_{1r}(k) + t_{2r}(k) < t_s$ ist, nimmt das Signal S den Wert $S_1$ an, während für den Fall, dass $t_{1r}(k) + t_{2r}(k) \geq t_s$ ist, das Signal S den Wert $S_2$ annimmt. Die Schaltglieder 170 bis 173 nehmen jeweils die zum Signal S gehörenden Schalterstellungen an, so dass der Ausgang der Schaltglieder ein zu dem entsprechenden Fall gehörenden Wert annimmt. Die Verzögerungseinheiten 174 bis 179 stellen Zwischenspeicher dar, die einen Eingangswert mit einer Zeitverzögerung von einem Takt des Integrationsintervalls, das heißt mit einer Zeitverzögung von $t_s$, an den Ausgang weiterleiten. Damit steht der Eingangswert einer Verzögerungseinheit im nächsten Integrationsintervall am Ausgang zur weiteren Verarbeitung zur Verfügung.

Die genaue Verschaltung der einzelnen Komponenten des Filters 160 kann der Figur 7 entnommen werden. Damit ermöglicht der Filter 160 die Berechnung des zweiten Gesamtinkrements $v(k)$ sowie der Zustandsübergänge $t_1(k+1)$, $t_2(k+1)$, $v_1(k+1)$, $v_2(k+1)$, $t_{1r}(k+1)$ und $t_{2r}(k+1)$ gemäß der Formeln (20) beziehungsweise (23), (21) und (22) beziehungsweise (24) und (25) sowie (26) bis (29).

## Patentansprüche

1. Verfahren zum Übertragen von Daten zwischen einer ersten Einheit, die Daten, die mit einer ersten Frequenz, $f_a$, erzeugt wurden, akkumuliert, und einer zweiten Einheit, die die akkumulierten Daten mit einer zweiten Frequenz, $f_s$, abfragt, die kleiner als die erste Frequenz, $f_a$, ist, umfassend:

   Abfragen eines ersten Gesamtinkrements, $v_0(k)$, und eines ersten Wertes, $W(k)$, der ein zum ersten Gesamtinkrement, $v_0(k)$, gehörendes Zeitinkrement, $t_0(k)$, repräsentiert, von der ersten Einheit, wobei das erste Gesamtinkrement, $v_o(k)$, der Dateninhalt des zum Abfragezeitpunkt, k, in der ersten Einheit vorliegenden akkumulierten Datenblocks ist,
   Erzeugen eines zweiten Gesamtinkrements, $v(k)$, aus dem ersten Gesamtinkrement, $v_0(k)$, unter Nutzung des ersten Wertes, $W(k)$, wobei das zweite Gesamtinkrement, $v(k)$, der Dateninhalt eines auf ein nominales Zeitinkrement, $t_s$, der zweiten Frequenz, $f_s$, angepassten Datenblocks ist, und
   Übertragen des zweiten Gesamtinkrements, $v(k)$, an die zweite Einheit.

2. Verfahren nach Anspruch 1,
   **dadurch gekennzeichnet, dass**:
   die Schritte zum Abfragen eines ersten Gesamtinkrements, $v_0(k)$, und eines ersten Wertes, $W(k)$, zum Erzeugen eines zweiten Gesamtinkrements, v(k), und zum Übertragen des zweiten Gesamtinkrements, v(k), wiederholt mit der zweiten Frequenz, $f_s$, ausgeführt werden.

**3.** Verfahren nach Anspruch 2,
**dadurch gekennzeichnet, dass**:
das zweite Gesamtinkrement, v(k), wie folgt berechnet wird:

$$v(k) = v_1(k) \cdot \frac{t_{1r}(k)}{t_1(k)} + v_0(k) \cdot \frac{t_s - t_{1r}(k)}{t_0(k)} - v_r(k),$$

wobei

$v_1(k)$ das im vorherigen Schritt zum Abfragen eines ersten Gesamtinkrements abgefragte vorherige erste Gesamtinkrement ist,
$t_1(k)$ das zum vorherigen ersten Gesamtinkrement gehörende Zeitinkrement ist,
$t_{1r}(k)$ der im vorherigen Schritt zum Erzeugen eines zweiten Gesamtinkrements noch nicht verarbeitete Restanteil des zum vorherigen ersten Gesamtinkrement gehörenden Zeitinkrements $t_1(k)$ ist,
$v_0(k)$ das im momentanen Schritt zum Abfragen des ersten Gesamtinkrements abgefragte erste Gesamtinkrement ist,
$t_s$ das zur zweiten Frequenz, $f_s$, gehörende nominale Zeitinkrement ist,
$t_0(k)$ das zum im momentanen Schritt zum Abfragen des ersten Gesamtinkrements abgefragten ersten Gesamtinkrement gehörende Zeitinkrement ist, und
$v_r(k)$ der im vorherigen Schritt zum Erzeugen des zweiten Gesamtinkrements verwendete extrapolierte Anteil ist, der im momentanen Schritt zum Erzeugen des zweiten Gesamtinkrements wieder subtrahiert werden muss.

**4.** Verfahren nach Anspruch 3,
**dadurch gekennzeichnet, dass**
für k=0 folgende Anfangsbedingungen gewählt werden:

$$t_0(0) = t_s,$$

$$t_1(0) = t_s,$$

$$t_{1r}(0) = 0,$$

$$v_1(0) = 0$$

und

$$v_r(0) = 0.$$

**5.** Verfahren nach Anspruch 3,
**dadurch gekennzeichnet, dass**
die im nächsten Schritt zum Erzeugen des zweiten Gesamtinkrements, v(k), zu verwendeten Werte von $t_1$(k+l), $v_1$(k+1), $t_{1r}$(k+1) und $v_r$(k+1) wie folgt berechnet werden:

$$t_1(k+1) = t_0(k),$$

$$v_1(k+1) = v_0(k),$$

und
für den Fall, dass $t_{1r}(k) + t_0(k) < t_s$:

$$v_r(k+1) = v_0(k) \cdot \frac{t_s - t_{1r}(k) - t_0(k)}{t_0(k)}$$

und

$$t_{1r}(k+1) = 0,$$

für den Fall, dass $t_{1r}(k) + t_0(k) \ge t_s$:

$$v_r(k+1) = 0$$

und

$$t_{1r}(k+1) = t_0(k) + t_{1r}(k) - t_s.$$

6. Verfahren nach Anspruch 2,
   **dadurch gekennzeichnet, dass**
   das zweite Gesamtinkrement, v(k), wie folgt berechnet wird:

   - für den Fall, dass $t_{2r}(k) + t_{1r}(k) < t_s$:

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2 r(k)}{t_0(k)},$$

   - für den Fall, dass $t_{2r}(k) + t_{1r}(k) \ge t_s$:

$$v(k) = v_2(k) \cdot \frac{t_{2r}(k)}{t_2(k)} + v_1(k) \cdot \frac{t_s - t_{2r}(k)}{t_1(k)},$$

   wobei

   $v_1(k)$ das im vorherigen Schritt zum Abfragen eines ersten Gesamtinkrements abgefragte vorherige erste Gesamtinkrement ist,
   $v2(k)$ das im vorvorherigen Schritt zum Abfragen eines ersten Gesamtinkrements abgefragte vorvorherige erste Gesamtinkrement ist,
   $t_1(k)$ das zum vorherigen ersten Gesamtinkrement gehörende Zeitinkrement ist,
   $t_{1r}(k)$ der im vorherigen Schritt zum Erzeugen eines zweiten Gesamtinkrements noch nicht verarbeitete Restanteil des zum vorherigen ersten Gesamtinkrement gehörenden Zeitinkrements $t_1(k)$ ist,
   $t2(k)$ das zum vorvorherigen ersten Gesamtinkrement gehörende Zeitinkrement ist,
   $t_{2r}(k)$ der in den bisherigen Schritten zum Erzeugen eines zweiten Gesamtinkrements noch nicht verarbeitete Restanteil des zum vorvorherigen ersten Gesamtinkrement gehörenden Zeitinkrements $t_2(k)$ ist,
   $v_0(k)$ das im momentanen Schritt zum Abfragen des ersten Gesamtinkrements abgefragte erste Gesamtinkrement ist,
   $t_s$ das zur zweiten Frequenz, $f_s$, gehörende nominale Zeitinkrement ist, und
   $t_0(k)$ das zum im momentanen Schritt zum Abfragen des ersten Gesamtinkrements abgefragten ersten Gesamtinkrement gehörende Zeitinkrement ist.

7. Verfahren nach Anspruch 6,

**dadurch gekennzeichnet, dass**
für k=0 folgende Anfangsbedingungen gewählt werden:

$$t_0(0) = t_s \,,$$

$$t_1(0) = t_s \,,$$

$$t_2(0) = t_s \,,$$

$$t_{1r}(0) = t_s \,,$$

$$t_{2r}(0) = 0 \,,$$

$$v_1(0) = 0$$

und

$$v_2(0) = 0 \,.$$

8. Verfahren nach Anspruch 6,
   **dadurch gekennzeichnet, dass**
   die im nächsten Schritt zum Erzeugen des zweiten Gesamtinkrements, v(k), zu verwendeten Werte von $t_1$(k+1), $t_2$(k+1), $v_1$(k+1), $v_2$(k+1), $t_{1r}$(k+1) und $t_{2r}$(k+1) wie folgt berechnet werden:

$$t_1(k+1) = t_0(k) \,,$$

$$t_2(k+1) = t_1(k) \,,$$

$$v_1(k+1) = v_0(k) \,,$$

$$v_2(k+1) = v_1(k) \,,$$

und
für den Fall, dass $t_{2r}(k) + t_{1r}(k) < t_s$:

$$t_{1r}(k+1) = t_0(k) - (t_s - t_{2r}(k) - t_{1r}(k))$$

und

$$t_{2r}(k+1) = 0 \,,$$

für den Fall, dass $t_{2r}(k) + t_{1r}(k) \geq t_s$:

$$t_{1r}(k+1) = t_0(k)$$

und

$$t_{2r}(k+1) = t_{1r}(k) + t_{2r}(k) - t_s.$$

**9.** Vorrichtung zum Übertragen von Daten zwischen einer ersten Einheit, die Daten, die mit einer ersten Frequenz, $f_a$, erzeugt wurden, akkumuliert, und einer zweiten Einheit, die die akkumulierten Daten mit einer zweiten Frequenz, $f_s$, abfragt, die kleiner als die erste Frequenz, $f_a$, ist, umfassend:

einen Eingang, der geeignet ist, ein erstes Gesamtinkrement, $v_0(k)$, und einen ersten Wert, W(k), der ein zum ersten Gesamtinkrement, $v_0(k)$, gehörendes Zeitinkrement, $t_0(k)$, repräsentiert, von der ersten Einheit mit der zweiten Frequenz, $f_s$, abzufragen, wobei das erste Gesamtinkrement, $v_0(k)$, der Dateninhalt des zum Abfragezeitpunkt in der ersten Einheit vorliegenden akkumulierten Datenblocks ist,
einen Filter, der geeignet ist, aus dem ersten Gesamtinkrement, $v_0(k)$, und dem ersten Wert, W(k), ein zweites Gesamtinkrement, v(k), zu erzeugen, wobei das zweite Gesamtinkrement, v(k), der Dateninhalt eines auf ein nominales Zeitinkrement, $t_s$, der zweiten Frequenz, $f_s$, angepassten Datenblocks ist, und
einen Ausgang, der geeignet ist, das zweite Gesamtinkrement, v(k), an die zweite Einheit mit der zweiten Frequenz, $f_s$, zu übertragen.

**10.** Vorrichtung nach Anspruch 9,
**dadurch gekennzeichnet dass**,
der Filter geeignet ist, das zweite Gesamtinkrement, v(k), wie folgt zu berechnen:

$$v(k) = v_1(k) \cdot \frac{t_{1r}(k)}{t_1(k)} + v_0(k) \cdot \frac{t_s - t_{1r}(k)}{t_0(k)} - v_r(k),$$

wobei

$v_1(k)$ das im vorherigen Abfragetakt der zweiten Frequenz, $f_s$, abgefragte vorherige erste Gesamtinkrement ist,
$t_1(k)$ das zum vorherigen ersten Gesamtinkrement gehörende Zeitinkrement ist,
$t_{1r}(k)$ der beim vorherigen Erzeugen eines zweiten Gesamtinkrements noch nicht verarbeiteten Restanteil des zum vorherigen ersten Gesamtinkrement gehörenden Zeitinkrements $t_1(k)$ ist,
$v_0(k)$ das im momentanen Abfragetakt der zweiten Frequenz, $f_s$, abgefragte erste Gesamtinkrement ist,
$t_s$ das zur zweiten Frequenz, $f_s$, gehörende nominale Zeitinkrement ist,
$t_0(k)$ das zum im momentanen Abfragetakt der zweiten Frequenz, $f_s$, abgefragten ersten Gesamtinkrement gehörende Zeitinkrement ist, und
$v_r(k)$ der beim vorherigen Erzeugen des zweiten Gesamtinkrements verwendete extrapolierte Anteil ist, der im momentanen Schritt zum Erzeugen des zweiten Gesamtinkrements wieder subtrahiert werden muss.

**11.** Vorrichtung nach Anspruch 10,
**dadurch gekennzeichnet, dass**
der Filter einen Startwertgeber umfasst, der geeignet ist, für k=0 folgende Anfangsbedingungen bereitzustellen:

$$t_0(0) = t_s,$$

$$t_1(0) = t_s,$$

$$t_{1r}(0) = 0,$$

$$v_1(0) = 0$$

und

$$v_r(0) = 0.$$

**12.** Vorrichtung nach Anspruch 10,
**dadurch gekennzeichnet, dass**
der Filter geeignet ist, die beim nächsten Erzeugen eines zweiten Gesamtinkrements, v(k+1), zu verwendeten Werte von $t_1(k+1)$, $v_1(k+1)$, $t_{1r}(k+1)$ und $v_r(k+1)$ wie folgt zu berechnen:

$$t_1(k+1) = t_0(k),$$

$$v_1(k+1) = v_0(k),$$

und
für den Fall, dass $t_{1r}(k) + t_0(k) < t_s$:

$$v_r(k+1) = v_0(k) \cdot \frac{t_s - t_{1r}(k) - t_0(k)}{t_0(k)}$$

und

$$t_{1r}(k+1) = 0,$$

für den Fall, dass $t_{1r}(k) + t_0(k) \geq t_s$:

$v_r(k+1) = 0$ und
$t_{1r}(k+1) = t_0(k) + t_{1r}(k) - t_s$.

**13.** Vorrichtung nach Anspruch 9,
**dadurch gekennzeichnet dass**,
der Filter geeignet ist, das zweite Gesamtinkrement, v(k), wie folgt zu berechnen:

- für den Fall, dass $t_{2r}(k) + t_{1r}(k) < t_s$:

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2r(k)}{t_0(k)},$$

- für den Fall, dass $t_{2r}(k) + t_{1r}(k) \geq t_s$:

$$v(k) = v_2(k) \cdot \frac{t_{2r}(k)}{t_2(k)} + v_1(k) \cdot \frac{t_s - t_{2r}(k)}{t_1(k)},$$

wobei

$v_1(k)$ das im vorherigen Abfragetakt der zweiten Frequenz, $f_s$, abgefragte vorherige erste Gesamtinkrement ist,
$v_2(k)$ das im vorvorherigen Abfragetakt der zweiten Frequenz, $f_s$, abgefragte vorvorherige erste Gesam-

tinkrement ist,

$t_1(k)$ das zum vorherigen ersten Gesamtinkrement gehörende Zeitinkrement ist,

$t_{1r}(k)$ der beim vorherigen Erzeugen eines zweiten Gesamtinkrements noch nicht verarbeitete Restanteil des zum vorherigen ersten Gesamtinkrement gehörenden Zeitinkrements $t_1(k)$ ist,

$t_2(k)$ das zum vorvorherigen ersten Gesamtinkrement gehörende Zeitinkrement ist,

$t_{2r}(k)$ der beim bisherigen Erzeugen eines zweiten Gesamtinkrements noch nicht verarbeitete Restanteil des zum vorvorherigen ersten Gesamtinkrement gehörenden Zeitinkrements $t_2(k)$ ist,

$v_0(k)$ das im momentanen Abfragetakt der zweiten Frequenz, $f_s$, abgefragte erste Gesamtinkrement ist,

$t_s$ das zur zweiten Frequenz, $f_s$, gehörende nominale Zeitinkrement ist, und

$t_0(k)$ das zum im momentanen Abfragetakt der zweiten Frequenz, $f_s$, abgefragten ersten Gesamtinkrement gehörende Zeitinkrement ist.

**14.** Vorrichtung nach Anspruch 13,
**dadurch gekennzeichnet, dass**
der Filter einen Startwertgeber umfasst, der geeignet ist, für k=0 folgende Anfangsbedingungen bereitzustellen:

$$t_0(0) = t_s \,,$$

$$t_1(0) = t_s \,,$$

$$t_2(0) = t_s \,,$$

$$t_{1r}(0) = t_s \,,$$

$$t_{2r}(0) = 0 \,,$$

$$v_1(0) = 0$$

und

$$v_2(0) = 0 \,.$$

**15.** Vorrichtung nach Anspruch 13,
**dadurch gekennzeichnet, dass**
der Filter geeignet ist, die beim nächsten Erzeugen eines zweiten Gesamtinkrements, v(k+1), zu verwendeten Werte von $t_1(k+1)$, $t_2(k+1)$. $v_1(k+1)$, $v_2(k+1)$, $t_{1r}(k+1)$ und $t_{2r}(k+1)$ wie folgt zu berechnen:

$$t_1(k+1) = t_0(k) \,,$$

$$t_2(k+1) = t_1(k) \,,$$

$$v_1(k+1) = v_0(k) \,,$$

$$v_2(k+1) = v_1(k) \,,$$

und

für den Fall, dass $t_{2r}(k) + t_{1r}(k) < t_s$:

$$t_{1r}(k+1) = t_0(k) - (t_s - t_{2r}(k) - t_{1r}(k))$$

und

$$t_{2r}(k+1) = 0 \, ,$$

für den Fall, dass $t_{2r}(k) + t_{1r}(k) \geq t_s$:

$$t_{1r}(k+1) = t_0(k)$$

und

$$t_{2r}(k+1) = t_{1r}(k) + t_{2r}(k) - t_s \, .$$

## Claims

1. A method for transmitting data between a first unit which accumulates data that have been generated with a first frequency, $f_a$, and a second unit which requests the accumulated data with a second frequency, $f_s$, which is smaller than the first frequency, $f_a$, the method comprising:

   requesting a first total increment, $v_0(k)$, and a first value, $W(k)$, which represents a time increment, $t_0(k)$, belonging to the first total increment, $v_0(k)$, from the first unit, wherein the first total increment, $v_0(k)$, is the data content of the accumulated data block provided at the requested time, k, in the first unit,
   generating of a second total increment, $v(k)$, from the first total increment, $v_0(k)$, using the first value, $W(k)$, wherein the second total increment, $v(k)$, is the data content of a data block adapted to a nominal time increment, $t_s$, of the second frequency, $f_s$, and
   transmitting the second total increment, $v(k)$, to the second unit.

2. The method according to claim 1,
   **characterized in that**:
   the steps of requesting a first total increment, $v_0(k)$, and of a first value, $W(k)$, of generating a second total increment, $v(k)$, and of transmitting the second total increment, $v(k)$, are carried out repeatedly with the second frequency, $f_s$.

3. The method according to claim 2,
   **characterized in that**:
   the second total increment, $v(k)$, is calculated as follows:

$$v(k) = v_1(k) \cdot \frac{t_{1r}(k)}{t_1(k)} + v_0(k) \cdot \frac{t_s - t_{1r}(k)}{t_0(k)} - v_r(k) \, ,$$

wherein

   $v_1(k)$ is the previous first total increment requested in the previous step of requesting a first total increment,
   $t_1(k)$ is the time increment belonging to the previous first total increment,
   $t_{1r}(k)$ is the residual part of the time increment $t_1(k)$ belonging to the previous first total increment that has not yet been processed in the previous step of generating a second total increment,
   $v_0(k)$ is the first total increment requested in the present step of requesting the first total increment,
   $t_s$ is the nominal time increment belonging to the second frequency, $f_s$,
   $t_0(k)$ is the time increment belonging to the first total increment requested in the present step of requesting the first total increment, and

$v_r(k)$ is the extrapolated part used in the previous step of generating the second total increment that has to be subtracted in the present step of generating the second total increment.

4. The method according to claim 3,
   **characterized in that**:
   for k=0 the following initial conditions are set:

$$t_0(0) = t_s,$$

$$t_1(0) = t_s,$$

$$t_{1r}(0) = 0,$$

$$v_1(0) = 0$$

and

$$v_r(0) = 0.$$

5. The method according to claim 3,
   **characterized in that**:
   the values of $t_1(k+1)$, $v_1(k+1)$, $t_{1r}(k+1)$ and $v_r(k+1)$ to be used in the next step of generating the second total increment, $v(k)$, are calculated as follows:

$$t_1(k+1) = t_0(k),$$

$$v_1(k+1) = v_0(k),$$

and
if $t_{1r}(k) + t_0(k) < t_s$:

$$v_r(k+1) = v_0(k) \cdot \frac{t_s - t_{1r}(k) - t_0(k)}{t_0(k)}$$

and

$$t_{1r}(k+1) = 0,$$

if

$$t_{1r}(k) + t_0(k) \geq t_s:$$

$$v_r(k+1) = 0$$

and

$$t_{1r}(k+1) = t_0(k) + t_{1r}(k) - t_s .$$

6. The method according to claim 2,
**characterized in that**:
the second total increment, v(k), is calculated as follows:

- if $t_{2r}(k) + t_{1r}(k) < t_s$:

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2 r(k)}{t_0(k)} ,$$

- if $t_{2r}(k) + t_{1r}(k) \geq t_s$:

$$v(k) = v_2(k) \cdot \frac{t_{2r}(k)}{t_2(k)} + v_1(k) \cdot \frac{t_s - t_{2r}(k)}{t_1(k)} ,$$

wherein

$v_1(k)$ is the previous first total increment requested in the previous step of requesting a first total increment,
$v_2(k)$ is the first total increment previous to the previous first total increment that is requested in the step previous to the previous step of requesting a first total increment,
$t_1(k)$ is the time increment belonging to the previous first total increment,
$t_{1r}(k)$ is the residual part of the time increment $t_1(k)$ belonging to the previous first total increment that has not yet been processed in the previous step of generating a second total increment,
t2(k) is the time increment belonging to the first total increment previous to the previous first total increment,
$t_{2r}(k)$ is the residual part of the time increment $t_2(k)$ belonging to the first total increment previous to the previous first total increment that has not yet been processed in the previous steps of generating a second total increment,
$v_0(k)$ is the first total increment requested in the present step of requesting the first total increment,
$t_s$ is the nominal time increment belonging to the second frequency, $f_s$, and
$t_0(k)$ is the time increment belonging to the first total increment requested in the present step of requesting the first total increment.

7. The method according to claim 6,
**characterized in that**:
for k=0 the following initial conditions are set:

$$t_0(0) = t_s ,$$

$$t_1(0) = t_s ,$$

$$t_2(0) = t_s ,$$

$$t_{1r}(0) = t_s ,$$

$$t_{2r}(0) = 0 ,$$

$$v_1(0) = 0$$

and

$$v_2(0) = 0 .$$

8. The method according to claim 6, **characterized in that**:

the values of $t_1(k+1)$, $t_2(k+1)$, $v_1(k+1)$, $v_2(k+1)$, $t_{1r}(k+1)$ and $t_{2r}(k+1)$ to be used in the next step of generating the second total increment, $v(k)$, are calculated as follows:

$$t_1(k+1) = t_0(k) ,$$

$$t_2(k+1) = t_1(k) ,$$

$$v_1(k+1) = v_0(k) ,$$

$$v_2(k+1) = v_1(k) ,$$

and
if $t_{2r}(k) + t_{1r}(k) < t_s$:

$$t_{1r}(k+1) = t_0(k) - (t_s - t_{2r}(k) - t_{1r}(k))$$

and

$$t_{2r}(k+1) = 0 ,$$

if $t_{2r}(k) + t_{1r}(k) \geq t_s$ :

$$t_{1r}(k+1) = t_0(k)$$

and

$$t_{2r}(k+1) = t_{1r}(k) + t_{2r}(k) - t_s .$$

9. A device for transmitting data between a first unit, which accumulates data that have been generated with a first frequency, $f_a$, and as second unit, which requests the accumulated data with a second frequency, $f_s$, which is smaller than the first frequency, $f_a$, the device comprising:

an input that is suitable to request a first total increment, $v_0(k)$, and a first value, $W(k)$, which represents a time increment, $t_0(k)$, belonging to the first total increment, $v_0(k)$, from the first unit with the second frequency, $f_s$, wherein the first total increment, $v_0(k)$, is the data content of an accumulated data block provided at the requested time in the first unit,
a filter that is configured to generate from the first total increment, $v_0(k)$, and the first value, $W(k)$, a second total increment, $v(k)$, wherein the second total increment, $v(k)$, is the data content of a data block adapted to a nominal

time increment, $t_s$, of the second frequency, $f_s$, and

an output that is configured to transmit the second total increment, $v(k)$, to the second unit with the second frequency, $f_s$.

**10.** The device according to claim 9,
**characterized in that**:
the filter is configured to calculate the second total increment, $v(k)$ as follows:

$$v(k) = v_1(k) \cdot \frac{t_{1r}(k)}{t_1(k)} + v_0(k) \cdot \frac{t_s - t_{1r}(k)}{t_0(k)} - v_r(k),$$

wherein

$v_1(k)$ is the previous first total increment requested in the previous request cycle of the second frequency, $f_s$,
$t_1(k)$ is the time increment belonging to the previous first total increment,
$t_{1r}(k)$ is the residual part of the time increment $t_1(k)$ belonging to the previous first total increment that has not yet been processed in the previous step of generating a second total increment,
$v_0(k)$ is the first total increment requested in the present request cycle of the second frequency, $f_s$,
$t_s$ is the nominal time increment belonging to the second frequency, $f_s$,
$t_0(k)$ is the time increment belonging to the first total increment requested in the present request cycle of the second frequency, $f_s$, and
$v_r(k)$ is the extrapolated part used in the previous step of generating the second total increment that has to be subtracted in the present step of generating the second total increment.

**11.** The device according to claim 10,
**characterized in that**:
the filter comprises an initial value setting unit that is configured to set for k=0 the following initial conditions:

$$t_0(0) = t_s,$$

$$t_1(0) = t_s,$$

$$t_{1r}(0) = 0,$$

$$v_1(0) = 0$$

and

$$v_r(0) = 0.$$

**12.** The device according to claim 10,
**characterized in that**:
the filter is configured to calculate the values of $t_1(k+1)$, $v_1(k+1)$, $t_{1r}(k+1)$ and $v_r(k+1)$ to be used in the next generating of a second total increment, $v(k+1)$ as follows:

$$t_1(k+1) = t_0(k),$$

$$v_1(k+1) = v_0(k),$$

and

if $t_{1r}(k) + t_0(k) < t_s$ :

$$v_r(k+1) = v_0(k) \cdot \frac{t_s - t_{1r}(k) - t_0(k)}{t_0(k)}$$

and

$$t_{1r}(k+1) = 0,$$

if $t_{1r}(k) + t_0(k) \geq t_s$ :

$$v_r(k+1) = 0$$

and

$$t_{1r}(k+1) = t_0(k) + t_{1r}(k) - t_s.$$

**13.** The device according to claim 9,
**characterized in that**:
the filter is configured to calculate the second total increment, v(k), as follows:

- if $t_{2r}(k) + t_{1r}(k) < t_s$:

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2r(k)}{t_0(k)},$$

- if $t_{2r}(k) + t_{1r}(k) \geq t_s$:

$$v(k) = v_2(k) \cdot \frac{t_{2r}(k)}{t_2(k)} + v_1(k) \cdot \frac{t_s - t_{2r}(k)}{t_1(k)},$$

wherein

$v_1(k)$ is the previous first total increment requested in the previous request cycle of the second frequency, $f_s$,
$v_2(k)$ is the first total increment previous to the previous first total increment requested in the request cycle previous to the previous request cycle of the second frequency, $f_s$,
$t_1(k)$ is the time increment belonging to the previous first total increment,
$t_{1r}(k)$ is the residual part of the time increment $t_1(k)$ belonging to the previous first total increment that has not yet been processed in the previous step of generating a second total increment,
t2(k) is the time increment belonging to the first total increment previous to the previous first total increment,
$t_{2r}(k)$ is the residual part of the time increment $t_2(k)$ belonging to the first total increment previous to the previous first total increment that has not yet been processed in the previous steps of generating a second total increment,
$v_0(k)$ is the first total increment requested in the present request cycle of the second frequency, $f_s$,
$t_s$ is the nominal time increment belonging to the second frequency, $f_s$, and
$t_0(k)$ is the time increment belonging to the first total increment requested in the present request cycle of the second frequency, $f_s$.

**14.** The device according to claim 13,
**characterized in that**:

the filter comprises an initial value setting unit that is configured to set for k=0 the following initial conditions:

$$t_0(0) = t_s,$$

$$t_1(0) = t_s,$$

$$t_2(0) = t_s,$$

$$t_{1r}(0) = t_s,$$

$$t_{2r}(0) = 0,$$

$$v_1(0) = 0$$

and

$$v_2(0) = 0.$$

15. The device according to claim 13,
    **characterized in that**:
    the filter is configured to calculate the values of $t_1(k+1)$, $t_2(k+1)$, $v_1(k+1)$, $v_2(k+1)$, $t_{1r}(k+1)$ and $t_{2r}(k+1)$ to be used in the next step of generating a second total increment, $v(k+1)$, as follows:

$$t_1(k+1) = t_0(k),$$

$$t_2(k+1) = t_1(k),$$

$$v_1(k+1) = v_0(k),$$

$$v_2(k+1) = v_1(k),$$

and
if $t_{2r}(k) + t_{1r}(k) < t_s$:

$$t_{1r}(k+1) = t_0(k) - (t_s - t_{2r}(k) - t_{1r}(k))$$

and

$$t_{2r}(k+1) = 0,$$

if $t_{2r}(k) + t_{1r}(k) \geq t_s$:

$$t_{1r}(k+1) = t_0(k)$$

and

$$t_{2r}(k+1) = t_{1r}(k) + t_{2r}(k) - t_s.$$

## Revendications

1. Procédé de transmission de données entre une première unité, qui accumule des données qui ont été générées à une première fréquence, $f_a$, et une deuxième unité, qui consulte les données accumulées à une deuxième fréquence, $f_s$, qui est inférieure à la première fréquence, $f_a$, comprenant :

   la consultation d'un premier incrément total, $v_0(k)$, et d'une première valeur, W(k), qui représente un incrément de temps, $t_0(k)$, appartenant au premier incrément total, $v_0(k)$, par la première unité, dans lequel le premier incrément total, $v_0(k)$, est le contenu de données du bloc de données accumulé présent au moment de consultation, k, dans la première unité,
   la génération d'un deuxième incrément total, v(k), à partir du premier incrément total, $v_0(k)$, en utilisant la première valeur, W(k), dans lequel le deuxième incrément total, v(k), est le contenu de données d'un bloc de données adapté à un incrément de temps nominal, $t_s$, de la deuxième fréquence, $f_s$, et
   la transmission du deuxième incrément total, v(k), à la deuxième unité.

2. Procédé selon la revendication 1,
   **caractérisé en ce que** :
   les étapes de consultation d'un premier incrément total, $v_0(k)$, et d'une première valeur, W(k), de génération d'un deuxième incrément total, v(k) et de transmission du deuxième incrément total, v(k), sont exécutées de manière répétée à la deuxième fréquence, $f_s$.

3. Procédé selon la revendication 2,
   **caractérisé en ce que** :
   le deuxième incrément total, v(k), est calculé comme suit :

   $$v(k) = v_1(k) \cdot \frac{t_{1r}(k)}{t_1(k)} + v_0(k) \cdot \frac{t_s - t_{1r}(k)}{t_0(k)} - v_r(k),$$

   dans lequel

   $v_1(k)$ est le premier incrément total antérieur consulté lors de l'étape antérieure de consultation d'un premier incrément total,
   $t_1(k)$ est l'incrément de temps appartenant au premier incrément total antérieur,
   $t_{1r}(k)$ est la fraction restante de l'incrément de temps $t_1(k)$ appartenant au premier incrément total antérieur, qui n'a pas encore été traitée lors de l'étape antérieure de génération d'un deuxième incrément total,
   $v_0(k)$ est le premier incrément total consulté lors de l'étape courante de consultation du premier incrément total,
   $t_s$ est l'incrément de temps nominal appartenant à la deuxième fréquence, $f_s$,
   $t_0(k)$ est l'incrément de temps appartenant au premier incrément total consulté lors de l'étape courante de consultation du premier incrément total, et
   $v_r(k)$ est la fraction extrapolée utilisée lors de l'étape antérieure de génération du deuxième incrément total, qui doit être à nouveau soustraite lors de l'étape courante de génération du deuxième incrément total.

4. Procédé selon la revendication 3,
   **caractérisé en ce que**
   sont sélectionnées pour k = 0 des conditions initiales suivantes :

$$t_0(0) = t_s,$$

$$t_1(0) = t_s,$$

$$t_{1r}(0) = 0,$$

$$v_1(0) = 0$$

et

$$v_r(0) = 0.$$

5. Procédé selon la revendication 3,
   **caractérisé en ce que**
   les valeurs de $t_1(k+1)$, $v_1(k+1)$, $t_{1r}(k+1)$ et $v_r(k+1)$ à utiliser lors de la prochaine étape de génération du deuxième incrément total, $v(k)$, sont calculées comme suit :

$$t_1(k+1) = t_0(k),$$

$$v_1(k+1) = v_0(k),$$

et
dans le cas où $t_{1r}(k) + t_0(k) < t_s$ :

$$v_r(k+1) = v_0(k) \cdot \frac{t_s - t_{1r}(k) - t_0(k)}{t_0(k)}$$

et

$$t_{1r}(k+1) = 0,$$

dans le cas où $t_{1r}(k) + t_0(k) \geq t_s$ :

$$v_r(k+1) = 0$$

et

$$t_{1r}(k+1) = t_0(k) + t_{1r}(k) - t_s.$$

6. Procédé selon la revendication 2,
   **caractérisé en ce que**
   le deuxième incrément total, $v(k)$, est calculé comme suit :

   - dans le cas où $t_{2r}(k) + t_{1r}(k) < t_s$ :

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_2r(k)}{t_0(k)},$$

- dans le cas où $t_{2r}(k) + t_{1r}(k) \geq t_s$ :

$$v(k) = v_2(k) \cdot \frac{t_{2r}(k)}{t_2(k)} + v_1(k) \cdot \frac{t_s - t_{2r}(k)}{t_1(k)},$$

dans lequel

$v_1(k)$ est le premier incrément total antérieur consulté lors de l'étape antérieure de consultation d'un premier incrément total,

$v_2(k)$ est le premier incrément total précédant le premier incrément total antérieur consulté lors de l'étape précédant l'étape antérieure de consultation d'un premier incrément total,

$t_1(k)$ est l'incrément de temps appartenant au premier incrément total antérieur,

$t_{1r}(k)$ est la fraction restante de l'incrément de temps $t_1(k)$ appartenant au premier incrément de temps antérieur, qui n'a pas encore été traitée lors de l'étape antérieure de génération d'un deuxième incrément total,

$t_2(k)$ est l'incrément de temps appartenant au premier incrément de temps précédant l'incrément de temps antérieur,

$t_{2r}(k)$ est la fraction restante de l'incrément de temps $t_2(k)$ appartenant au premier incrément de temps précédant l'incrément de temps antérieur, qui n'a pas encore été traitée dans les étapes jusqu'à présent de génération d'un deuxième incrément total,

$v_0(k)$ est le premier incrément total consulté lors de l'étape courante de consultation du premier incrément total,

$t_s$ est l'incrément de temps nominal appartenant à la deuxième fréquence, $f_s$, et

$t_0(k)$ est l'incrément de temps appartenant au premier incrément de temps consulté lors de l'étape courante de consultation du premier incrément de temps.

7. Procédé selon la revendication 6,
   **caractérisé en ce que**
   sont sélectionnées pour k = 0 des conditions initiales suivantes :

$$t_0(0) = t_s,$$

$$t_1(0) = t_s,$$

$$t_2(0) = t_s,$$

$$t_{1r}(0) = t_s,$$

$$t_{2r}(0) = 0,$$

$$v_1(0) = 0$$

et

$$v_2(0) = 0.$$

8. Procédé selon la revendication 6,
   **caractérisé en ce que**
   les valeurs de $t_1(k+1)$, $t_2(k+l)$, $v_1(k+1)$, $v_2(k+1)$, $t_{1r}(k+1)$ et $t_{2r}(k+1)$ à utiliser lors de la prochaine étape de génération du deuxième incrément total, $v(k)$, sont calculées comme suit :

$$t_1(k+1) = t_0(k),$$

$$t_2(k+1) = t_1(k),$$

$$v_1(k+1) = v_0(k),$$

$$v_2(k+1) = v_1(k),$$

et
dans le cas où $t_{2r}(k) + t_{1r}(k) < t_s$ :

$$t_{1r}(k+1) = t_0(k) - (t_s - t_{2r}(k) - t_{1r}(k))$$

et

$$t_{2r}(k+1) = 0,$$

dans le cas où $t_{2r}(k) + t_{1r}(k) \geq t_s$ :

$$t_{1r}(k+1) = t_0(k)$$

et

$$t_{2r}(k+1) = t_{1r}(k) + t_{2r}(k) - t_s.$$

9. Dispositif de transmission de données entre une première unité, qui accumule des données qui ont été générées à une première fréquence, $f_a$, et une deuxième unité, qui consulte les données accumulées à une deuxième fréquence, $f_s$, qui est inférieure à la première fréquence, $f_a$, comprenant :

   une entrée qui est adaptée pour consulter de la première unité à la deuxième fréquence, $f_s$, un premier incrément total, $v_0(k)$, et une première valeur, $W(k)$, qui représente un incrément de temps, $t_0(k)$, appartenant au premier incrément total, $v_0(k)$, dans lequel le premier incrément total, $v_0(k)$, est le contenu de données du bloc de données accumulé présent au moment de la consultation dans la première unité,
   un filtre qui est adapté pour générer à partir du premier incrément total, $v_0(k)$, et de la première valeur, $W(k)$, un deuxième incrément total, $v(k)$, dans lequel le deuxième incrément total, $v(k)$, est le contenu de données d'un bloc de données adapté à un incrément de temps, $t_s$, nominal de la deuxième fréquence, $f_s$, et
   une sortie qui est adaptée pour transmettre le deuxième incrément total, $v(k)$, à la deuxième unité à la deuxième fréquence, $f_s$.

10. Dispositif selon la revendication 9,
    **caractérisé en ce que**

le filtre est adapté pour calculer le deuxième incrément total, v(k), comme suit :

$$v(k) = v_1(k) \cdot \frac{t_{1r}(k)}{t_1(k)} + v_0(k) \cdot \frac{t_s - t_{1r}(k)}{t_0(k)} - v_r(k),$$

dans lequel

$v_1(k)$ est le premier incrément total antérieur consulté lors de la cadence de consultation antérieure de la deuxième fréquence, $f_s$,
$t_1(k)$ est l'incrément de temps appartenant au premier incrément total antérieur,
$t_{1r}(k)$ est la fraction restante de l'incrément de temps $t_1(k)$ appartenant au premier incrément total antérieur, laquelle n'a pas encore été traitée lors de la génération antérieure d'un deuxième incrément total,
$v_0(k)$ est le premier incrément total consulté lors de la cadence de consultation courante de la deuxième fréquence, $f_s$,
$t_s$ est l'incrément de temps nominal appartenant à la deuxième fréquence, $f_s$,
$t_0(k)$ est l'incrément de temps appartenant au premier incrément total consulté lors de la cadence de consultation courante de la deuxième fréquence, $f_s$, et
$v_r(k)$ est la fraction extrapolée utilisée lors de la génération antérieure du deuxième incrément total, qui doit être à nouveau soustraite lors de l'étape courante de génération du deuxième incrément total.

11. Dispositif selon la revendication 10,
   **caractérisé en ce que**
   le filtre comprend un capteur de valeur de départ, qui est adapté pour fournir pour k = 0 des conditions initiales suivantes :

$$t_0(0) = t_s,$$

$$t_1(0) = t_s,$$

$$t_{1r}(0) = 0,$$

$$v_1(0) = 0$$

et

$$v_r(0) = 0.$$

12. Dispositif selon la revendication 10,
   **caractérisé en ce que**
   le filtre est adapté pour calculer les valeurs de $t_1(k+1)$, $v_1(k+1)$, $t_{1r}(k+1)$ et $v_r(k+1)$ à utiliser lors de la prochaine génération d'un deuxième incrément total, v(k+1), comme suit :

$$t_1(k+1) = t_0(k),$$

$$v_1(k+1) = v_0(k),$$

et
dans le cas où $t_{1r}(k) + t_0(k) < t_s$ :

$$v_r(k+1) = v_0(k) \cdot \frac{t_s - t_{1r}(k) - t_0(k)}{t_0(k)}$$

et

$$t_{1r}(k+1) = 0,$$

dans le cas où $t_{1r}(k) + t_0(k) \geq t_s$ :

$$v_r(k+1) = 0$$

et

$$t_{1r}(k+1) = t_0(k) + t_{1r}(k) - t_s.$$

**13.** Dispositif selon la revendication 9,
**caractérisé en ce que**
le filtre est adapté pour calculer le deuxième incrément total, v(k), comme suit :

- dans le cas où $t_{2r}(k) + t_{1r}(k) < t_s$ :

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_s - t_{1r}(k) - t_{2}r(k)}{t_0(k)},$$

- dans le cas où $t_{2r}(k) + t_{1r}(k) \geq t_s$ :

$$v(k) = v_2(k) \cdot \frac{t_{2r}(k)}{t_2(k)} + v_1(k) \cdot \frac{t_s - t_{2r}(k)}{t_1(k)},$$

dans lequel

$v_1(k)$ est le premier incrément total antérieur consulté lors de la cadence de consultation antérieure de la deuxième fréquence, $f_s$,
$v_2(k)$ est le premier incrément total précédant le premier incrément total antérieur consulté lors de la cadence de consultation précédant la cadence antérieure de la deuxième fréquence, $f_s$,
$t_1(k)$ est l'incrément de temps appartenant au premier incrément total antérieur,
$t_{1r}(k)$ est la fraction restante de l'incrément de temps $t_1(k)$ appartenant au premier incrément total antérieur, qui n'a pas encore été utilisée lors de la génération antérieure d'un deuxième incrément total,
$t_2(k)$ est l'incrément de temps appartenant au premier incrément total précédant le premier incrément total antérieur,
$t_{2r}(k)$ est la fraction restante de l'incrément de temps $t_2(k)$ appartenant au premier incrément total précédant le premier incrément total antérieur, qui n'a pas encore été traitée lors de la génération jusqu'à présent d'un deuxième incrément total,
$v_0(k)$ est le premier incrément total consulté lors de la cadence de consultation courante de la deuxième fréquence, $f_s$,
$t_s$ est l'incrément de temps nominal appartenant à la deuxième fréquence, $f_s$, et
$t_0(k)$ est l'incrément de temps appartenant au premier incrément total consulté lors de la cadence de consultation courante de la deuxième fréquence, $f_s$.

14. Dispositif selon la revendication 13,
**caractérisé en ce que**
le filtre comprend un capteur de valeur de départ, qui est adapté pour fournir pour k = 0 des conditions initiales suivantes :

$$t_0(0) = t_s,$$

$$t_1(0) = t_s,$$

$$t_2(0) = t_s,$$

$$t_{1r}(0) = t_s,$$

$$t_{2r}(0) = 0,$$

$$v_1(0) = 0$$

et

$$v_2(0) = 0.$$

15. Dispositif selon la revendication 13,
**caractérisé en ce que**
le filtre est adapté pour calculer les valeurs de $t_1(k+1)$, $t_2(k+1)$, $v_1(k+1)$, $v_2(k+1)$, $t_{1r}(k+1)$ et $t_{2r}(k+1)$ à utiliser lors de la prochaine génération d'un deuxième incrément total, $v(k+1)$, comme suit :

$$t_1(k+1) = t_0(k),$$

$$t_0(k+1) = t_1(k),$$

$$v_1(k+1) = v_0(k),$$

$$v_2(k+1) = v_1(k),$$

et
dans le cas où $t_{2r}(k) + t_{1r}(k) < t_s$ :

$$t_{1r}(k+1) = t_0(k) - (t_s - t_{2r}(k) - t_{1r}(k))$$

et

$$t_{2r}(k+1) = 0 \, ,$$

dans le cas où $t_{2r}(k) + t_{1r}(k) \geq t_s$ :

$$t_{1r}(k+1) = t_0(k)$$

et

$$t_{2r}(k+1) = t_{1r}(k) + t_{2r}(k) - t_s \, .$$

FIG 1A

Akkumulatorstand
...

$\frac{1}{f_a}$

Zeit t

FIG 1B

Zeit t

$\frac{1}{f_s}$

$v_0$

$v_i$

...Zeit t

abgefragte
Gesamtinkremente

# FIG. 2

```
                    ┌──────────┐
         ┌─────────▶│  Start   │
         │          └────┬─────┘
         │               │
         │               ▼
         │     ┌──────────────────────────┐
         │     │  Abfragen v₀(k) und W(k)  │─── S11
         │     │    von erster Einheit     │
         │     └────────────┬─────────────┘
    ┌────┴────┐             │
    │ k=k+1   │             ▼
    └────┬────┘   ┌──────────────────────────┐
         │        │       Erzeugen v(k)       │─── S12
         │        └────────────┬─────────────┘
         │                     │
         │                     ▼
         │        ┌──────────────────────────┐
         │        │ Übertragen v(k) an zweite Einheit │─── S13
         │        └────────────┬─────────────┘
         └─────────────────────●
                               │
                               ▼
                          ┌──────────┐
                          │   Ende   │
                          └──────────┘
```

## FIG. 3

```
        ┌──────────┐
        │  Start   │
        │   k=0    │
        └────┬─────┘  S21
             │
             ▼
  ┌──────────────────┐         ┌──────────────┐
  │  v₀(k), t₀(k)    │ ◀────── │  v₀(k), W(k) │
  └────────┬─────────┘         └──────────────┘
           │                              S23
           ▼                      ┌──────────────────┐
        ╱───────╲      ja         │  t₀(0), t₁(0), … │
       ╱  k=0?   ╲ ──────────▶    └──────────────────┘
       ╲         ╱                         │
        ╲───────╱                          │
  S22      │ nein                          │
           ▼ ◀────────────────────────────┘
  ┌──────────────────────────┐
  │  v(k)= f₁(v₀(k),t₀(k),…)  │   S24
  └────────────┬─────────────┘
               │
               ▼              S25
           ╱────────────╲
          ╱ t₁ᵣ(k)+t₀(k) ╲
          ╲   <tₛ?       ╱
           ╲────────────╱
      ja  ╱              ╲  nein                S27
         ▼                ▼
┌──────────────────┐  ┌──────────────────────┐
│ vᵣ(k+1)=f₂(v₀(k),…)│  │   vᵣ(k+1)=0          │
│ t₁ᵣ(k+1)=0       │  │ t₁ᵣ(k+1)=f₃(t₀(k),…) │
└────────┬─────────┘  └──────────┬───────────┘
    S26  │                       │
         └───────────┬───────────┘
                     ▼
          ┌──────────────────────┐
          │  t₁(k+1)=t₀(k)        │  S28
          │  v₁(k+1)=v₀(k)        │
          └──────────┬───────────┘
                     ●
                     ▼
              ┌──────────┐
              │   Ende   │
              └──────────┘
```

$v(k)= f_1(v_0(k), t_0(k), \ldots)$

$t_{1r}(k) + t_0(k) < t_s?$

$v_r(k+1) = f_2(v_0(k), \ldots)$
$t_{1r}(k+1) = 0$

$v_r(k+1) = 0$
$t_{1r}(k+1) = f_3(t_0(k), \ldots)$

$t_1(k+1) = t_0(k)$
$v_1(k+1) = v_0(k)$

$k = k+1$  S29

## FIG. 4

# FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1343261 A1